(19)

**Europäisches Patentamt**
**European Patent Office**
**Office européen des brevets**

(11) **EP 4 521 815 A1**

(12) **EUROPEAN PATENT APPLICATION**

(43) Date of publication:
**12.03.2025 Bulletin 2025/11**

(21) Application number: **24199167.8**

(22) Date of filing: **09.09.2024**

(51) International Patent Classification (IPC):
**H04W 28/02** $^{(2009.01)}$    **H04W 88/08** $^{(2009.01)}$

(52) Cooperative Patent Classification (CPC):
**H04W 28/0268; H04W 72/543; H04W 88/085**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.09.2023 IN 202321060283**
**06.09.2024 US 202418826303**

(71) Applicant: **Mavenir Systems, Inc.**
**Richardson, TX 75081 (US)**

(72) Inventor: **TANEJA, Mukesh**
**560037 Bangalore (IN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **SYSTEM AND METHODS FOR NETWORK SLICING FOR COEXISTENCE OF LOW LATENCY, LOW LOSS AND SCALABLE THROUGHPUT (L4S) AND NON-L4S TRAFFIC IN WIRELESS NETWORKS**

(57) A system method of resource allocation for co-existence of low latency, low loss and scalable throughput (L4S) traffic and non-L4S traffic in a 5G wireless system includes: classifying, by a centralized unit - user plane (CU-UP), each downlink (DL) data radio bearer (DRB) as one of L4S DRB or non-L4S DRB and sorting the computed scheduling metric values for each L4S and non-L4S DRB to select a specified L number of logical channels with the highest values of the scheduling metric.

```
           +----------+                        +----------+
           |   Web    |                        |   Web    |
           |          |                        |          |
           |  Server  |------------------------|  Server  |
           |          |    Signaling Path      |          |
           +----------+   (e.g. SIP, XMPP)     +----------+
                 /                                   \
                /                                     \ Application-defined
               /                                       \ over
              /                                          \ HTTPS/WebSockets
             /  Application-defined over                  \
            /   HTTPS/WebSockets                           \
           /                                                \
     +----------+                                      +----------+
     |JS/HTML/CSS|                                     |JS/HTML/CSS|
     +----------+                                      +----------+
     |          |                                      |          |
     |          |                                      |          |
     | Browser  |--------------------------------------| Browser  |
     |          |          Media Path                  |          |
     |          |           (Data)                     |          |
     +----------+                                      +----------+

                 JS: Java Script
                 SIP: Session Initiation Protocol
                 API: Application Programming Interface
                 XMPP: Extensible Messaging and Presence Protocol
```

FIG. 1

**Description**

SUMMARY

Disclosed are implementations of a system and method to achieve enhanced resource allocation and/or management for efficient co-existence of L4S and non-L4S traffic in 5G networks, e.g., 5G RAN systems, supporting network slices.

According to an example method, enhanced resource allocation and/or management is achieved for efficient co-existence of L4S and non-L4S traffic in 5G networks, e.g., 5G RAN systems, supporting network slices. In the first step, CU-UP classifies each DL DRB as L4S or non-L4S DRB. In the second step, the classification from the first step is communicated to CU-CP and DU by enhancing an E1 interface exchange (between CU-UP and CU-CP) and an F1-C interface exchange (between CU-CP and DU). In addition, a DRB can be dynamically reclassified, if needed. In the fourth step, DU computes a scheduling metric value for each L4S and non-L4S DRBs (or for their associated logical channels). In the fifth step, the computed scheduling metric values are sorted in the order of the values, and maximum L logical channels with the highest values of the scheduling metric are selected to serve in a slot (in this example, L depends on hardware and software capabilities of the base station system). In the sixth step, one of the example methods (described in further detail below, e.g., for exemplary methods 1A, 1B, 1C, 2A, 2B, 2C, or 3) is selected. In each iteration of the selected method, resources are allocated to an L4S DRB or a non-L4S DRB to use a minimum of the resources given by the selected method and the resources implied by the scheduling policy being implemented at the DU (using the scheduling metric computed in the fourth step).

According to an example method, i) each DRB is classified as L4S DRB or non-L4S DRB, and ii) resources are split (e.g., at DU) for each slice into resources for two virtual slices, e.g., resources for a slice with S-NSSAI m are split into resources for two virtual slices, i.e., one virtual slice for L4S DRBs and another virtual slice for non-L4S DRBs. These virtual slices exist at the gNB level and are used for managing resources for L4S and non-L4S DRBs for slice (with S-NSSAI m) in the gNB. Different types of resources can be split as follows:

1) Dedicated resources for virtual L4S slice m and virtual non-L4S slice m: These resources are split (e.g., based on customer policies) such that the sum of dedicated resources for virtual L4S slice m (corresponding to L4S traffic of slice with S-NSSAI m) and dedicated resources for virtual non-L4S slice m (corresponding to non-L4S traffic of slice with S-NSSAI m) are equal to the dedicated resources for slice with S-NSSAI m (for each slice m).

2) Prioritized resources for virtual L4S slice m and virtual non-L4S slice m: The sum of prioritized resources for virtual L4S slice m and prioritized resources for virtual non-L4S slice m are equal to the prioritized resources for slice with S-NSSAI m (for each slice m).

3) Shared resources for slice with S-NSSAI m are split into shared resources for virtual L4S slice m and virtual non-L4S slice m in a similar manner as the prioritized resources are split as described above.

Accordingly, described are implementations of a system and method therefor for enhanced resource allocation for optimizing coexistence of low latency, low loss and scalable throughput (L4S) traffic and non-L4S traffic in a 5G network wireless system, comprising:

classifying, by a centralized unit - user plane (CU-UP), each downlink (DL) data radio bearer (DRB) as one of L4S DRB or non-L4S DRB;

communicating the classification result to a centralized unit - control plane (CU-CP) and a distributed unit (DU);

computing, by the DU, a scheduling metric value for each L4S DRB and non-L4S DRB;

sorting the computed scheduling metric values in the order of the values;

selecting a maximum specified L number of logical channels (LC) with the highest values of the scheduling metric to serve in a slot; and

performing at least one of the following:

i) performing, at the DU, resource allocation for L4S DRBs and non-L4S DRBs, wherein the DU is configured to map L4S Quality of Service Flow Identifiers (QFIs) and non-L4S QFIs to the same DRB, and each DRB is associated with a slice in the 5G wireless system; and

ii) splitting, at the DU, resources for each slice into resources for two virtual slices including one virtual slice for L4S DRBs and another virtual slice for non-L4S DRBs.

In an implementation, the system and method can further comprise: enhancing an E1 interface exchange

between CU-UP and CU-CP and enhancing an F1-C interface exchange between CU-CP and DU for communicating the classification result to the CU-CP and the DU.

In an implementation, the resources for the virtual slices can be spilt into one or more of:

dedicated resources for the virtual L4S slice and the virtual non-L4S slice;
prioritized resources for the virtual L4S slice and the virtual non-L4S slice; or
for a slice with a S-NSSAI, shared resources for the virtual L4S slice and the virtual non-L4S slice.

In an implementation, the selecting a maximum specified L number of LC with the highest values of the scheduling metric to serve in a slot can comprise:

classifying the DRB as the L4S DRB for which a percentage of a QoS flow in that DRB that are carrying L4S traffic from L4S sources is at least above a predetermined threshold percentage; and
if, at a later time the percentage of QoS flow L4S traffic goes below the predetermined threshold for the L4S DRB, reclassifying the DRB as the non-L4S DRB.

In an implementation, the system and method can further comprise: allocating resources for L4S DRBs, non-L4S DRBs, or both by selecting a maximum specified L number of LC with the highest values of the scheduling metric to serve in a slot in a first iteration; and allocating resources for any remaining non-L4S DRBs by selecting the maximum specified L number of different LC with the highest values of the scheduling metric to serve in the slot in a second iteration.

In an implementation, the selecting a maximum specified L number of LC with the highest values of the scheduling metric to serve in a slot can comprise: if a selected LC is a L4S LC, attempting, by the DU, to serve the maximum amount of data using the dedicated resources, the prioritized resources, and the shared resources. In an implementation, the system and method can further comprise:

first assigning, by the DU, available RBs from a pool of the dedicated resources for the L4S slice;
if the L4S LC can utilize more of the resources in a same time slot, assigning by the DU any available RBs from a pool of the prioritized resources for the L4S slice;
if the L4S LC can utilize more of the resources in a same time slot, assigning by the DU any available RBs from a pool of the shared resources for the L4S slice; and
repeating the process with a next LC with a next highest value of scheduling metric.

In an implementation, the selecting a maximum specified L number of LC with the highest values of the scheduling metric to serve in a slot can comprise: if a selected LC is a non-L4S LC, attempting, by the DU, to serve the maximum amount of data using only the dedicated resources and the prioritized resources. In an implementation, the system and method can further comprise:

assigning, by the DU, available RBs from a pool of the dedicated resources for the non-L4S slice;
if the non-L4S LC can utilize more of the resources in a same time slot, assigning by the DU any available RBs from a pool of the prioritized resources for the non-L4S slice; and
repeating the process with a next LC with a next highest value of scheduling metric.

In an implementation, the selecting a maximum specified L number of LC with the highest values of the scheduling metric to serve in a slot can comprise: if a selected LC is a non-L4S LC, attempting, by the DU, to serve the maximum amount of data using only the dedicated resources. In an implementation, the system and method can further comprise assigning, by the DU, available RBs from a pool of the dedicated resources for the non-L4S slice; and repeating the process with a next LC with a next highest value of scheduling metric.

In an implementation, the system and method can further comprise allocating no non-L4S DRBs to the non-L4S LCs in the first iteration.

In an implementation, the selecting a maximum specified L number of LC with the highest values of the scheduling metric to serve in a slot can comprise: identifying a set of non-L4S LCs assigned in the first iteration that have more queue data to be served and selecting the non-L4S LCs from the set in the descending order of the value of scheduling priorities, and allocating, by the DU, the non-L4S LCs using the dedicated resources, the prioritized resources, and the shared resources. The identifying the set of non-L4S LCs by in the first iteration can comprise: a) attempting, by the DU, to serve the maximum amount of data using only the dedicated resources and/or the prioritized resources; b) attempting by the DU, to serve the maximum amount of data using only the dedicated resources; and c) allocating no non-L4S DRBs to non-L4S LCs in the first iteration. In an implementation, the system and method can further comprise: switching the allocation as a function of L4S and non-L4S network traffic. In an implementation, the system and method can comprise: selecting allocation a) when a proportion of L4S users is below a first threshold; switching to allocation b) when the proportion of L4S users increases to and above the first threshold; and switching to allocation c) when the proportion of L4S users increases to and above a second first threshold greater than the first threshold.

In an implementation, the system and method can further comprise:

splitting the dedicated resources for the virtual L4S slice and the virtual non-L4S slice such that a sum of dedicated resources for the virtual L4S slice m, which corresponds to L4S traffic of slice with S-NSSAI m, and the dedicated resources for the virtual non-L4S slice m, which corresponds to non-L4S traffic of slice with S-NSSAI m, are equal to the dedicated resources for slice with S-NSSAI m for each slice m;

splitting the prioritized resources for the virtual L4S slice and the virtual non-L4S slice such that a sum of the prioritized resources for the virtual L4S slice m and the prioritized resources for the virtual non-L4S slice m are equal to the prioritized resources for slice with a S-NSSAI m or each slice m; and/or

for a slice with a S-NSSAI, splitting the shared resources for the virtual L4S slice m and the virtual non-L4S slice such that a sum of the prioritized resources for the virtual L4S slice m and the prioritized resources for the virtual non-L4S slice m are equal to the prioritized resources for slice with S-NSSAI mf or each slice m. The system and method can further comprise: applying a splitting ratio to split the resources for the slice into dedicated resources, the prioritized resources, and the shared resources.

In an implementation, the system and method can further comprise: applying a preferential treatment for the shared resources to the L4S DRBs; and applying the splitting ratio for dedicated resources and the prioritized resources.

In an implementation, the system and method can further comprise: applying a preferential treatment for the prioritized resources and the shared resources to the L4S DRBs; and applying the splitting ratio for the dedicated resources only.

In an implementation, the system and method can further comprise: applying the splitting ratio for the dedicated resources to the virtual L4S slice, and setting the dedicated resources for the corresponding non-L4S slice to be zero, whereby preferential treatment is given to L4S DRBs for the dedicated resources, the prioritized resources and the shared resources.

In an implementation, the system and method can further comprise: adding a Slice/Service Type (SST) for a L4S-eMBB slice; contacting, by a UE, a DNS server to convert a web address to an IP address, to determine if a corresponding L4S server is supporting L4S services; and asking, by the UE, for an L4S-eMBB slice instead of an eMBB slice when the UE establishes a PDU session in the 5G network. The system and method can further comprise: determining, by the UE, if an intermediate node in the 5G network path also supports L4S services. The system and method can further comprise: building a database of frequently accessed application servers at the UE, and tracking, by the UE, whether or not the frequently accessed servers support L4S services.

Features and advantages of the present disclosure will be appreciated and understood by those skilled in the art from the following detailed description, drawings, and appended claims.

DESCRIPTION OF THE DRAWINGS

FIG. 1 is a block diagram of multi-domain webRTC system.

FIG. 2 is a block diagram illustrating the user plane stack of 5G NR.

FIG. 3 is a block diagram illustrating the user plane protocol stacks for a PDU session of 5G NR.

FIG. 4 is a block diagram illustrating the control plane stack of 5G NR.

FIG. 5 is a block diagram illustrating NG-RAN architecture.

FIG. 6A is a block diagram illustrating separation of CU-CP and CU-UP in NG-RAN architecture.

FIG. 6B is a block diagram illustrating separation of CU-CP and CU-UP in 4G architecture.

FIG. 7 is a block diagram illustrating DL L2 structure.

FIG. 8 is a block diagram illustrating UL L2 structure.

FIG. 9 is a block diagram illustrating L2 data flow example.

FIG. 10 illustrates an overview of O-RAN architecture.

FIG. 11 is a block diagram illustrating an example PDU session comprising multiple DRBs, each DRB comprising one or more QoS flows.

FIG. 12 illustrates signal flows of example PDU sessions comprising multiple DRBs and QFIs.

FIG. 13 is a block diagram illustrating RRM with a MAC Scheduler.

FIG. 14 illustrates the structure of S-NSSAI.

FIG. 15 illustrates a signal flow diagram of a UE establishing a PDU session with a specific Data Network Name (DNN).

FIG. 16 illustrates a high-level view of network slice management.

FIG. 17 illustrates the classes and attributes of 5G Network Resource Model (NRM) for resource allocation to slices.

FIG. 18 illustrates the structure of RRM Policy Ratio.

FIG. 19 illustrates an example of resource allocation for DL resource blocks, involving two slices in a cell.

FIG. 20 is a flow diagram illustrating example methods for achieving resource allocation and/or management for efficient co-existence of L4S and non-L4S traffic in 5G networks, e.g., 5G RAN systems, supporting network slices.

FIG. 21 illustrates a signal flow diagram of multiple QoS flows for L4S DRBs and non-L4S DRBs.

FIG. 22 illustrates a signal flow diagram of classifying a DRB as an L4S DRB.

FIG. 23 illustrates a signal flow diagram of reclassifying L4S DRB as non-L4S DRB.

FIG. 24 summarizes Methods 1A, 1B and 1C for resource allocation for L4S and non-L4S logical channels.

FIG. 25 illustrates splitting of resources for a slice with S-NSSAI m into resources for two virtual slices, i.e., one virtual slice for L4S DRBs and another virtual slice for non-L4S DRBs.

FIG. 26 illustrates an example resource allocation scenarios and policies for Methods 2A, 2B and 2C.

FIG. 27 illustrates example Methods 2A, 2B and 2C.

FIG. 28 illustrates adding a new Slice/Service Type (SST) for L4S-eMBB slices.

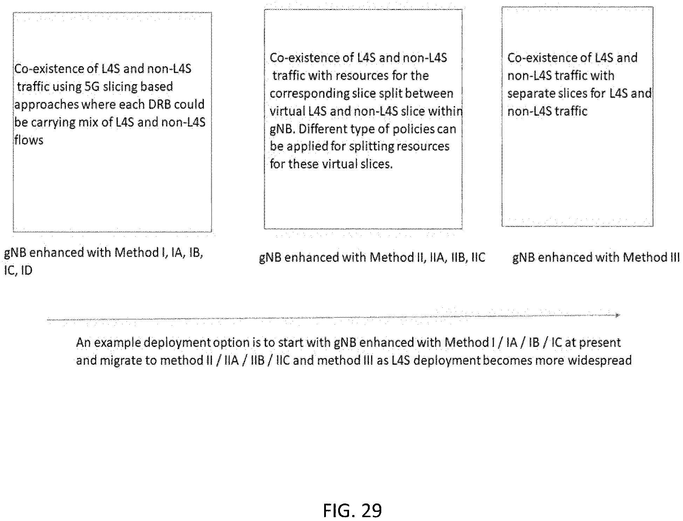

FIG. 29 illustrates an example deployment option with varying methods as L4S service becomes more widespread in a 5G system.

## DETAILED DESCRIPTION

For this application, the following terms and definitions shall apply:

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

Reference is made to Third Generation Partnership Project (3GPP) and the Internet Engineering Task Force (IETF) and related standards bodies in accordance with embodiments of the present disclosure. The present disclosure employs abbreviations, terms and technology defined in accord with Third Generation Partnership Project (3GPP) and/or Internet Engineering Task Force (IETF) technology standards and papers, including the following standards and definitions. 3GPP, O-RAN, and IETF technical specifications (TS), standards (including proposed standards), technical reports (TR) and other papers are incorporated by reference in their entirety hereby, define the related terms and architecture reference models that follow.

3GPP TS 23.501 V 18.1.0 2023-04-05

3GPP TS 28.500 V. 17.0.0 2023-03-31

3GPP TS 28.541 V 18.4.1 2023-06-30

3GPP TS 38.300 V 17.4.0 2023-03-28

3GPP TS 38.401 V 17.4.0 2023-04-03

Mockapetris, P., "Domain names - concepts and facilities", STD 13, RFC 1034, DOI 10.17487/RFC1034, November 1987, <https://www.rfc-editor.org/info/rfc1034>.

Mockapetris, P., "Domain names - implementation and specification", STD 13, RFC 1035, DOI 10.17487/RFC1035, November 1987, <https://www.rfc-editor.org/info/rfc1035>.

Alvestrand, H., "Overview: Real-Time Protocols for Browser-Based Applications", RFC 8825, DOI 10.17487/RFC8825, January 2021, <https://www.rfc-editor.org/info/rfc8825>.

A list of abbreviations used in the present specification is provided below:

5GC: 5G Core Network
5G NR: 5G New Radio
5QI: 5G QoS Identifier
ACK: Acknowledgement
AM: Acknowledged Mode
APN: Access Point Name
ARP: Allocation and Retention Priority
BS: Base Station
CP: Control Plane
CQI: Channel Quality Indicator
CU: Centralized Unit
CU-CP: Centralized Unit- Control Plane
CU-UP: Centralized Unit - User Plane
DL: Downlink
DDDS: DL Data Delivery Status
DNN: Data Network Name
DRB: Data Radio Bearer
DU: Distributed Unit
eMBB: Enhanced Mobile Broadband
eNB: evolved NodeB
EPC: Evolved Packet Core
GBR: Guaranteed Bit Rate
gNB: gNodeB (next generation node B)
GTP-U: GPRS Tunneling Protocol - User Plane
IP: Internet Protocol

L1: Layer 1
L2: Layer 2
L3: Layer 3
L4S: Low Latency, Low Loss and Scalable Throughput
LC: Logical Channel
MAC: Medium Access Control
NACK: Negative Acknowledgement
NAS: Non-Access Stratum
NR-U: New Radio - User Plane
NSI: Network Slice Instance
NSSI: Network Slice Subnet Instance
O-RAN: Open Radio Access Network
PDB: Packet Delay Budget
PDCP : Packet Data Convergence Protocol
PDU: Protocol Data Unit
PHY: Physical Layer
QCI: QoS Class Identifier
QFI: QoS Flow Identifier
QoS : Quality of Service
RAT: Radio Access Technology
RB: Resource Block
RDI: Reflective QoS Flow to DRB Indication
RLC: Radio Link Control
RLC-AM: RLC Acknowledged Mode
RLC-UM: RLC Unacknowledged Mode
RQI: Reflective QoS Indication
RRC: Radio Resource Control
RRM: Radio Resource Management
RTP: Real-Time Transport Protocol
RTCP: Real-Time Transport Control Protocol
RU: Radio Unit
SCTP: Stream Control Transmission Protocol
SD: Slice Differentiator
SDAP: Service Data Adaptation Protocol
SLA: Service Level Agreement
S-NSSAI: Single Network Slice Selection Assistance
SST: Slice / Service Type
TCP: Transmission Control Protocol
TEID: Tunnel Endpoint Identifier
UE: User Equipment
UP: User Plane
UL: Uplink
UM: Unacknowledged Mode
UPF: User Plane Function

Described are implementations for a Low Latency, Low Loss and Scalable Throughput (L4S), and optimizing resource allocation and management for coexistence of L4S and non-L4S Traffic in 5G-type networks using network slice.

A L4S architecture enables Internet applications to achieve low queuing latency, low congestion loss and scalable throughput control. With L4S architecture, several Internet applications could transition away from capacity seeking congestion control algorithms that cause substantial delay and adopt a new class of congestion controls that seek capacity with very little queuing delay. A modified form of Explicit Congestion Notification (ECN) is used to assist with this mechanism. It also allows new class of L4S congestion controls to co-exist with classic congestion control in a shared network. The main concepts of L4S are provided below.

Explicit Congestion Notification (ECN): ECN uses two bits in an IP header for notification of congestion in the network. Four different codepoints supported by ECN for L4S are used:

1. Binary codepoint 00, Non-ECN Capable Transport (non-ECT). If a source marks a packet as Non-ECT, this packet does not support ECN and cannot be marked as Congestion Experienced (CE) if congestion occurs at a network node.

2. Binary codepoint 01, ECN Capable Transport (ECT)(1). This is used for L4S Capable Transport. In this case, a packet is sent in the L4S queue at a network node (and not in the classic queue). Also, the packet supports ECN and can be marked as Congestion Experienced (CE) by network nodes if congestion occurs.

3. Binary codepoint 10, ECT(0), ECN Capable Transport but not L4S Capable. In this case, the packet needs to be sent in the classic queue at a network node and not in the L4S queue.

4. Binary codepoint 11, Congestion Experienced (CE).

The L4S capable network node supports two queues - a Classic queue (for non-L4S packets) and an L4S queue (for L4S packets). Packets with non-ECT and ECT(0) codepoints are sent to the classic queue and other packets with codepoints ECT(1) and CE are sent to the L4S queue. In the L4S architecture, a network node marks packets as CE (Congestion Experienced) in the L4S queue as soon as a queuing delay in that node exceeds a threshold.

For the above, network nodes are required to distinguish L4S traffic from classic traffic for co-existence and incremental deployment. For ensuring low latency, L4S relies on Accurate ECN, which allows the sender to react more finely according to the congestion level, but which requires an adapted transport stack, such as Transmission Control Protocol (TCP) Prague.

Scalable Congestion Control protocol in end hosts: These control methods adapt the rate of the sender node proportionally to the number of congestion signals received. During congestion, these control methods decrease the rate of the sender node (in proportion to the number of CE-marked packets received at the receiver) and this decrease is less than what one finds with the Classic congestion control methods (such as with TCP Reno). TCP Prague (used with L4S), DCTCP (Data Center TCP) and Self-Clocked Rate Adaptation for Multimedia (SCReAM) are some examples of scalable congestion control methods.

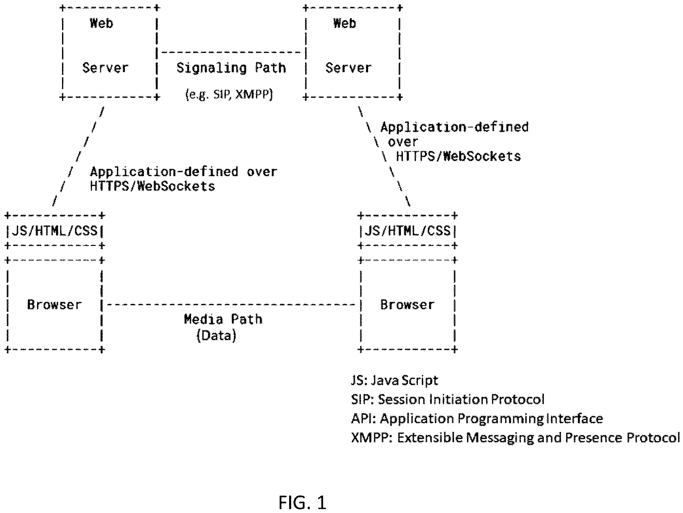

The Web Real Time Communication (WebRTC) framework provides the building blocks from which web and app developers can seamlessly add video chat to a range of applications. The Real-Time Communications on the Web (RTCWEB) Working Group of Internet Engineering Task Force (IETF) standardized protocols for real-time communications between Web browsers, generally called "WebRTC" in RFC 8825. Some of the use cases for WebRTC technology are real-time audio and/or video calls, web conferencing, and direct data transfer. Unlike most conventional Session Initiation Protocol (SIP)-based real-time systems, WebRTC communications are directly controlled by some web server, via a JavaScript (JS) API, as shown in FIG. 1. WebRTC uses codecs such as H.264, iSAC, Opus and VP8. Products such as Google™ Hangouts™, Whatsapp™, Facebook™ Messenger™, ZOOM™ Team Communication, Skype™ for Web, and so on are integrated with WebRTC. Scalable congestion control methods have been designed for WebRTC type of applications also. Self-Clocked Rate Adaptation for Multimedia (SCReAM) Congestion Control is one such control method used by multimedia traffic sources which uses RTP / RTCP type of protocols for data and control.

Active Queue Management (AQM) in bottleneck links: AQM drops packets from a queue before reaching its memory limits and improves performance of end-to-end flows. AQM can also mark packets instead of dropping them if input traffic is ECN capable. To improve the coexistence of different traffic types, L4S architecture uses DualQ Coupled AQM, which enables the fair sharing of bandwidth of the low-latency (LL) traffic and other best effort (BE) traffic, via a coupling between the two queueing algorithms.

This overall end-to-end procedure works as follows (with the L4S architecture) in the IP networks: 1) The source (or sender) indicates L4S support through the ECN codepoint 01; 2) the Network nodes identify a packet as an L4S packet and changes the ECN bits to Congestion Experienced (CE with codepoint 11) when congestion occurs; 3) The receiver checks the ECN bits on receipt of a packet and notifies the source about the congestion if it receives a Congestion Experienced (CE) codepoint in the ECN bits; and 4) The source (or sender) adapts the sending rate as per the Scalable Congestion Control described above.

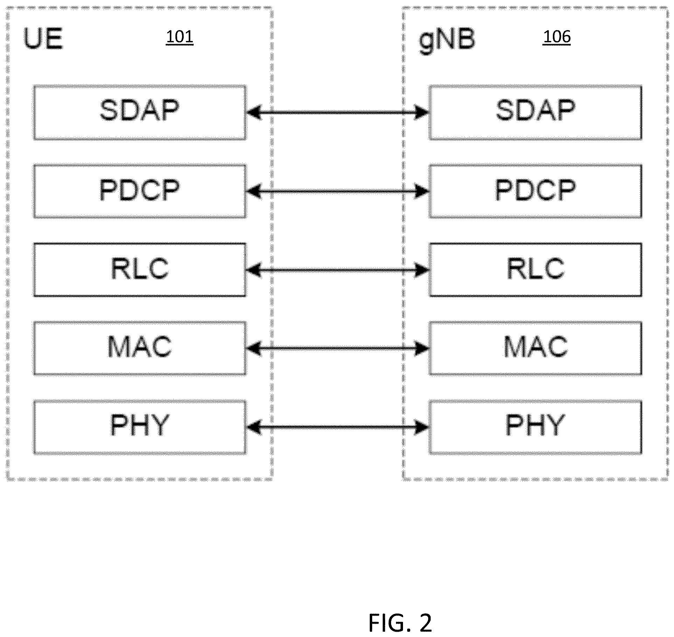

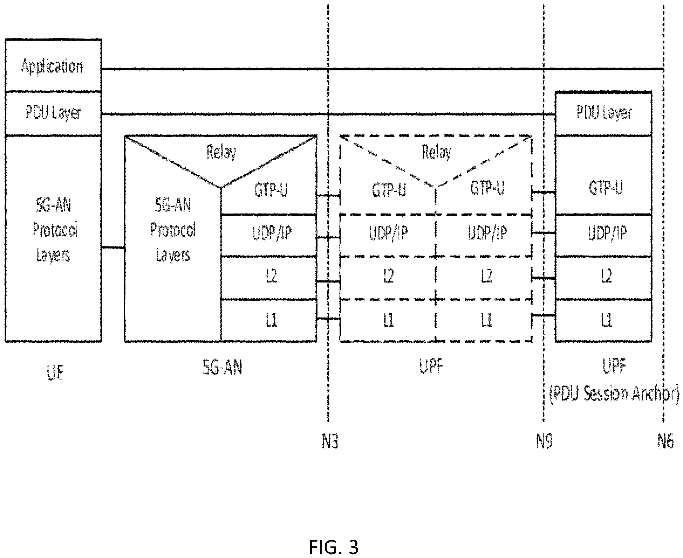

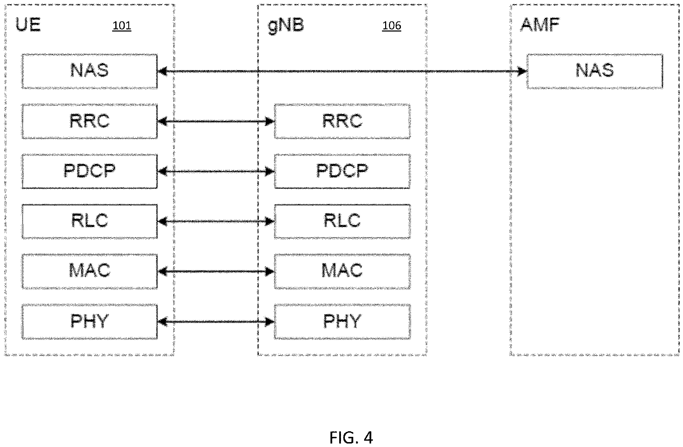

In the following sections, an overview of Next Generation Radio Access Network (NG-RAN) architecture and 5G New Radio (NR) stacks is given. 5G NR (New Radio) user and control plane functions with monolithic gNB 106 (gNodeB) are shown in FIGS. 2-4. For the user plane (shown in FIG. 2, which is in accordance with 3GPP TS 38.300), PHY (physical), MAC (Medium Access Control), RLC (Radio Link Control), PDCP (Packet Data Convergence Protocol) and SDAP (Service Data Adaptation Protocol) sublayers are terminated in the gNB 106 on the network side. In addition, as shown in FIG. 3 (which is accordance with 3GPP TS 23.501), which is a block diagram illustrating the user plane protocol stacks for a PDU session of 5G NR, the Protocol Data Unit (PDU) layer corresponds to the PDU carried between the user equipment (UE) 101 and the data network (DN) over the PDU session. The PDU session can correspond to Internet Protocol version 4 (IPv4), IPv6, or both types of IP packets (IPv4v6). General Packet Radio Services (GPRS) Tunneling Protocol - User Plane (GTP-U) supports tunnelling user plane data over N3 and N9 in FIG. 3. It provides encapsulation of end user PDUs for N3 and N9 interfaces. For the control plane (shown in FIG. 4, which is in accordance with 3GPP TS 38.300), RRC (Radio Resource Control), PDCP, RLC, MAC and PHY sublayers are terminated in the gNB 106 on the network side and NAS (Non-Access Stratum) is terminated in the AMF (Access Mobility Function) on the network side.

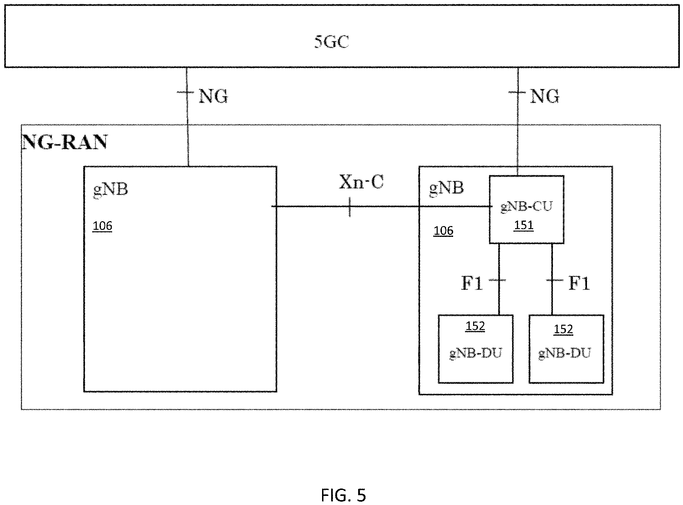

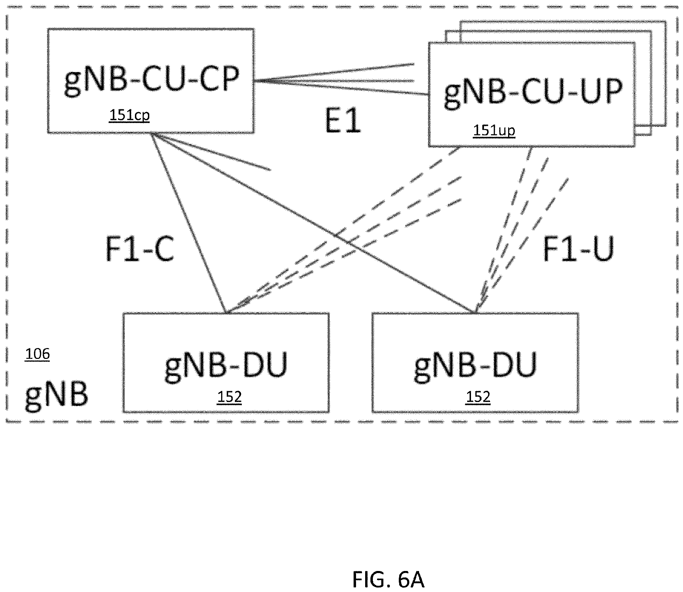

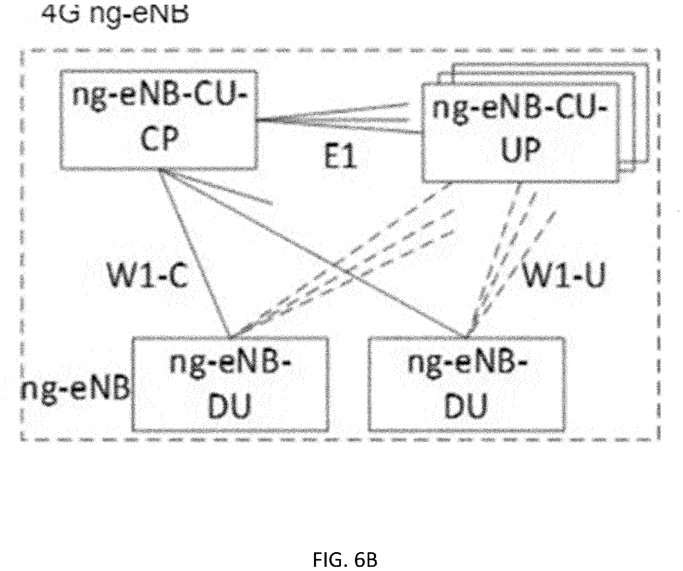

NG-Radio Access Network (NG-RAN) architecture from 3GPP TS 38.401 is shown in FIG. 5 and FIGS. 6A-6B. As shown in FIG. 5, the NG-RAN comprises of a set of gNBs 106 connected to the 5GC through the NG interface. As shown in FIG. 5, F1 is the interface between gNB-CU 151 (gNB 106 - Centralized Unit) and gNB-DU 152 (gNB 106 - Distributed Unit), NG is the interface between gNB-CU 151 (or gNB) and 5GC (5G Core), and Xn is interface between gNBs 106 (in FIG. 4, Xn-C connects the first gNB 106 to the gNB-CU 151 of the second gNB). As shown in FIG. 6A (which illustrates separation of CU-CP 151cp (CU-Control Plane) and CU-CP 151up (CU-User Plane)), E1 is the interface between gNB-CU-CP 151cp (CU-Control Plane) and gNB-CU-CP 151up (CU-User Plane), F1-C is the interface between gNB-CU-CP 151cp and gNB-DU, and F1-U is the interface between gNB-CU-CP 151up and gNB-DU 152. A gNB can comprise a gNB-CU-CP 151cp, multiple gNB-CU-CP 151ups and multiple gNB-DUs 152. One gNB-DU 152 is connected to only one gNB-CU-CP 151cp and one gNB-CU-CP 151up is connected to only one gNB-CU 151. FIG. 6B shows an example of a Separation of 4G CU-CP (CU-Control Plane) and CU-UP (CU-User Plane). The example shown in FIG. 6Bshows ng-eNB but legacy eNB also applies same architecture.

In this section, an overview Layer 2 (L2) of 5G NR is provided. L2 of 5G NR is split into the following sublayers (in accordance with 3GPP TS 38.300):

1) Medium Access Control (MAC): The MAC sublayer offers Logical Channels (LCs) to the RLC sublayer. This layer runs a MAC scheduler to schedule radio resources across different LCs (and their associated radio bearers).

2) Radio Link Control (RLC): The RLC sublayer offers RLC channels to the Packet Data Convergence Protocol (PDCP) sublayer. The RLC sublayer supports three transmission modes: RLC-Transparent Mode (RLC-TM), RLC-Unacknowledged Mode (RLC-UM) and RLC-Acknowledgement Mode (RLC-AM). RLC configuration is per logical channel. It hosts ARQ (Automatic Repeat Request) protocol for RLC-AM mode.

3) Packet Data Convergence Protocol (PDCP): The PDCP sublayer offers Radio Bearers (RBs) to the SDAP sublayer. There are two types of Radio Bearers: Data Radio Bearers (DRBs) for data, and Signaling Radio Bearers (SRBs) for control plane.

4) Service Data Adaptation Protocol (SDAP): The SDAP offers QoS Flows to the 5GC (5G Core). This sublayer provides mapping between a QoS flow and a DRB. It marks QoS Flow Id in DL (downlink) as well as UL (uplink packets).

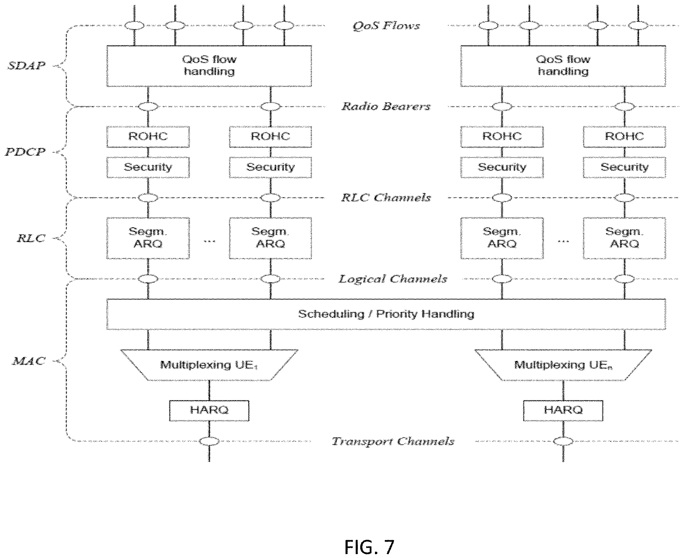

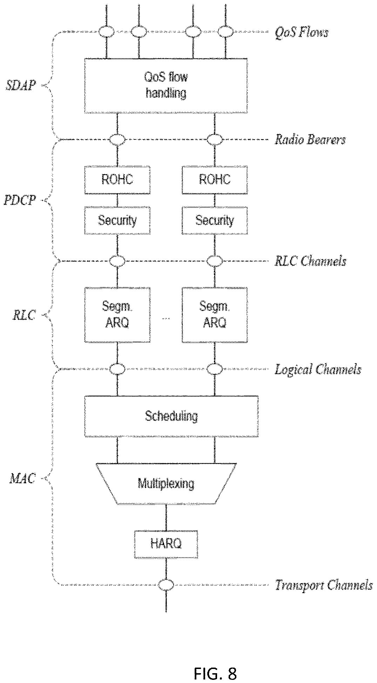

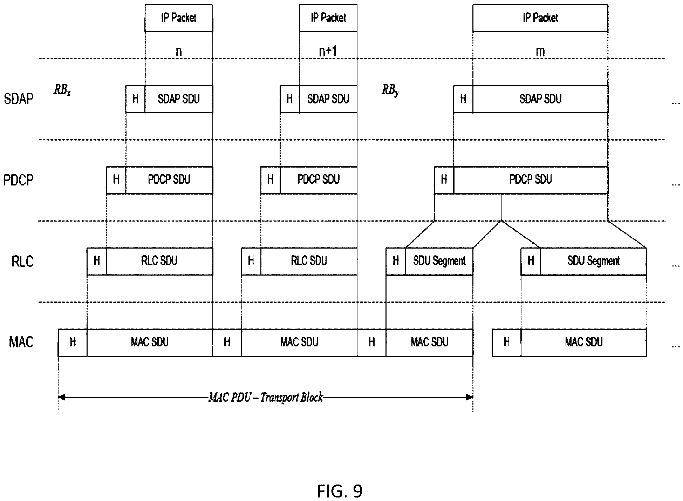

FIG. 7 is a block diagram illustrating DL L2 structure, in accordance with 3GPP TS 38.300. FIG. 8 is a block diagram illustrating UL L2 structure, in accordance with 3GPP TS 38.300. FIG. 9 is a block diagram illustrating L2 data flow example, in accordance with 3GPP TS 38.300 (in FIG. 9, H denotes headers or sub-headers).

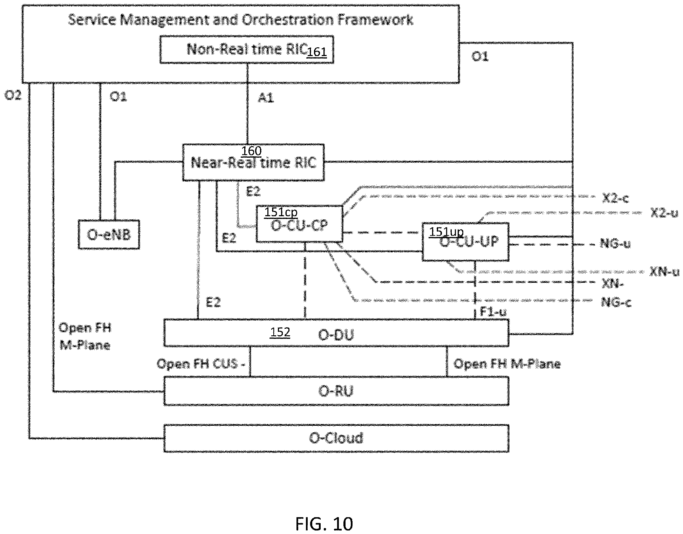

Open Radio Access Network (O-RAN) is based on disaggregated components which are connected through open and standardized interfaces based on 3GPP NG-RAN. An overview of O-RAN with disaggregated RAN CU 151 (Centralized Unit), DU (Distributed Unit), and RU (Radio Unit), near-real-time Radio Intelligent Controller (RIC) 160 and non-real-time RIC 161 is illustrated in FIG. 10.

As shown in FIG. 10, the CU 151 and the DU 152 are connected using the F1 interface (with F1-C for control plane and F1-U for user plane traffic) over a mid-haul (MH) path. One DU can host multiple cells (e.g., one DU could host 24 cells) and each cell can support many users. For example, one cell can support 600 Radio Resource Control (RRC)-connected users and out of these 600, there can be 200 Active users (i.e., users that have data to send at a given point of time).

A cell site can comprise multiple sectors, and each sector can support multiple cells. For example, one site could comprise three sectors and each sector could support eight cells (with eight cells in each sector on different frequency bands). One CU-CP (CU-Control Plane) can support multiple DUs 152 and thus multiple cells. For example, a CU-CP can support 1,000 cells and around 100,000 User Equipments (UEs 101). Each UE can support multiple Data Radio Bearers (DRB) and there can be multiple instances of CU-UP (CU-User Plane) to serve these DRBs. For example, each UE 101 cab support 4 DRBs, and 400,000 DRBs (corresponding to 100,000 UEs) 101 can be served by five CU-UP instances (and one CU-CP instance).

The DU 152 can be located in a private data center, or it can be located at a cell-site. The CU 151 can also be in a private data center or even hosted on a public cloud system. The DU and CU, which are typically located at different physical locations, can be tens of kilometers apart. The CU 151 communicates with a 5G core system, which can also be hosted in the same public cloud system (or can be hosted by a different cloud provider). A RU (Radio Unit) is located at a cell-site and communicates with the DU via a front-haul (FH) interface.

The E2 nodes (CU and DU) are connected to the near-real-time RIC 160 using the E2 interface. The E2 interface is used to send data (e.g., user cell, slice KPMs) from the RAN, and deploy control actions and policies to the RAN at near-real-time RIC 160. The application or service at the near-real-time RIC 160 that deploys the control actions and policies to the RAN are called xApps. The near-real-time RIC 160 is connected to the non-real-time RIC 161 using the A1 interface.

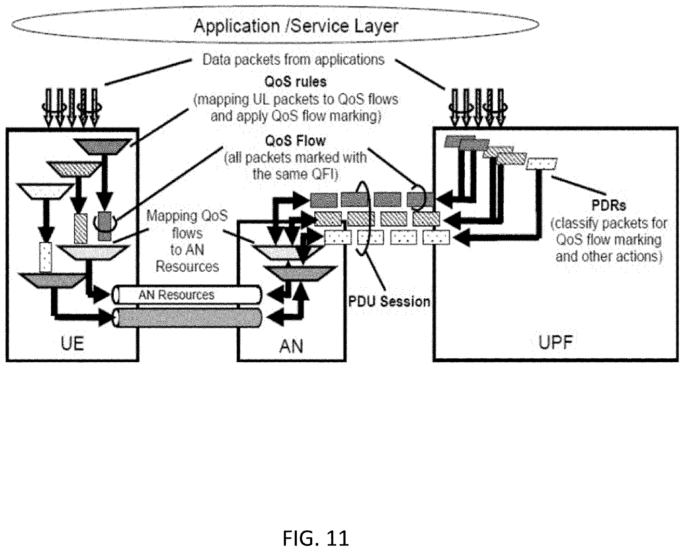

In this section, PDU sessions, DRBs, and quality of service (QoS) flows will be discussed. In 5G networks, PDU connectivity service is a service that provides exchange of PDUs between a UE 101 and a data network identified by a Data Network Name (DNN). The PDU Connectivity service is supported via PDU sessions that are established upon request from the UE 101. The DNN defines the interface to a specific external data network. One or more QoS flows can be supported in a PDU session. All the packets belonging to a specific QoS flow have the same 5QI (5G QoS Identifier). A PDU session comprises of the following: Data Radio Bearer which is between UE 101 and CU 151 in RAN; and an NG-U GTP tunnel which is between CU 151 and UPF (User Plane Function) in the core network. FIG. 11 illustrates an example PDU session (in accordance with 3GPP TS 23.501) comprising of multiple DRBs, where each DRB can comprise multiple QoS flows. In FIG. 11, three components are shown for the PDU session: UE 101; access network (AN); and UPF, which includes Packet Detection Rules (PDRs).

The following is noted for 3GPP 5G network architecture:

1) The transport connection between the base station (i.e., CU-UP) and the UPF uses a single GTP-U tunnel per PDU session. The PDU session is identified using GTP-U TEID (Tunnel Endpoint Identifier).

2) The transport connection between the DU 152 and the CU-UP uses a single GTP-U tunnel per DRB.

3) SDAP:

    a) The SDAP (Service Adaptation Protocol) Layer receives downlink data from the UPF across the NG-U interface.

    b) The SDAP maps one or more QoS Flow(s) onto a specific DRB.

    c) The SDAP header is present between the UE 101 and the CU 151 (when reflective QoS is enabled), and includes a field to identify the QoS flow within a specific PDU session.

4) User plane protocol includes a field to identify the QoS flow (QoS Flow Identifier) and is present between CU 151 and UPF (in the core network).

5) The SDAP sublayer can have multiple SDAP entities, one for each PDU session on the gNB-UE Uu interface where SDAP entity establishment (or release) is initiated by RRC. The SDAP layer receives downlink data from the UPF (User Plane Function) over NG-U interface. This QoS Flow is identified using an identity within the "PDU Session Container" which is included within the GTP-U header. The PDU Session is identified using the GTP-U Tunnel Endpoint Identifier (TEID).

6) QoS flows of different PDU sessions are mapped to different DRBs.

7) Each DRB is handled by a single PDCP entity. This maps to one RLC entity for RLC AM mode and two RLC entities for RLC UM mode (one RLC UM downlink entity and another RLC UM uplink entity).

8) There is at most one default DRB in every PDU session. SDAP PDU is sent on the default DRB if there is no uplink mapping.

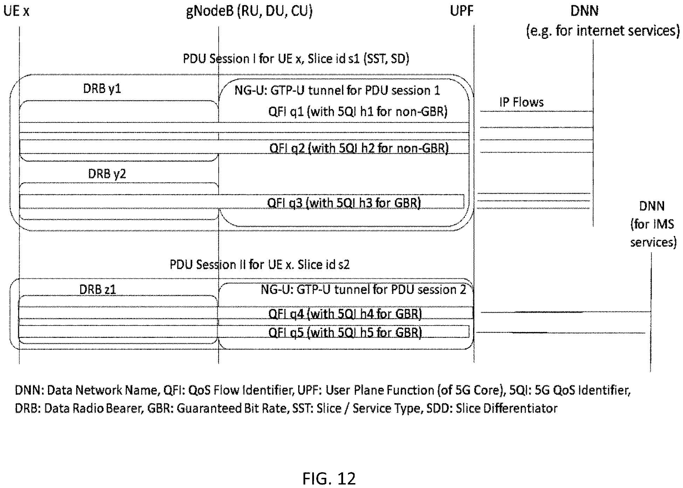

FIG. 12 illustrates an example PDU session comprising multiple DRBs and QFIs.

In this section, standardized 5QI to QoS characteristics mapping is discussed. As per 3GPP TS 23.501, the one-to-one mapping of standardized 5QI values to 5G QoS characteristics is specified in Table 1 shown below. The first column represents the 5QI value. The second column lists the different resource types, i.e., as one of Non-GBR, GBR, Delay-critical GBR. The third column ("Default Priority Level") represents the priority level Priority5QI, for which the lower the value the higher the priority of the corresponding QoS flow. The fourth column represents the Packet Delay Budget (PDB), which defines an upper bound for the time that a packet can be delayed between the UE 101 and the N6 termination point at the UPF. The fifth column represents the Packet Error Rate (PER). The sixth column represents the maximum data burst volume for delay-critical GBR types. The seventh column represents averaging window for GBR, delay critical GBR types.

For example, as shown in Table 1, 5QI value 1 represents GBR resource type with the default priority value of 20, PDB of 100 ms, PER of 0.01, and averaging window of 2000ms. Conversational voice falls under this category. Similarly, as shown in Table 1, 5QI value 7 represents non-GBR resource type with the default priority value of 70, PDB of 100ms and PER of 0.001. Voice, video (live streaming), and interactive gaming fall under this category.

Table 1

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 1 | GBR (NOTE 1) | 20 | 100 ms (NOTE 11, NOTE 13) | $10^{-2}$ | N/A | 2000 ms | Conversational Voice |
| 2 | | 40 | 150 ms (NOTE 11, NOTE 13) | $10^{-3}$ | N/A | 2000 ms | Conversational Video (Live Streaming) |
| 3 | | 30 | 50 ms (NOTE 11, NOTE 13) | $10^{-3}$ | N/A | 2000 ms | Real Time Gaming, V2X messages (see TS 23.287 [121]). Electricity distribution - medium voltage, Process automation monitoring |
| 4 | | 50 | 300 ms (NOTE 11, NOTE 13) | $10^{-6}$ | N/A | 2000 ms | Non-Conversational Video (Buffered Streaming) |
| 66 (NOTE 9, NOTE 12) | | 7 | 75 ms (NOTE 7, NOTE 8) | $10^{-2}$ | N/A | 2000 ms | Mission Critical user plane Push To Talk voice (e.g., MCPTT) |
| 66 (NOTE 12) | | 20 | 100 ms (NOTE 10, NOTE 13) | $10^{-2}$ | N/A | 2000 ms | Non- Mission-Critical user plane Push To Talk voice |
| 67 (NOTE 12) | | 15 | 100 ms (NOTE 10, NOTE 13) | $10^{-3}$ | N/A | 2000 ms | Mission Critical Video user plane |
| 75 (NOTE 14) | | | | | | | |
| 71 | | 56 | 150 ms (NOTE 11, NOTE 13, NOTE 15) | $10^{-6}$ | N/A | 2000 ms | "Live" Uplink Streaming (e.g. TS 26 238 [76]) |

**EP 4 521 815 A1**

(continued)

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 72 | | 56 | 300 ms (NOTE 11, NOTE 13, NOTE 15) | $10^{-4}$ | N/A | 2000 ms | "Live" Uplink Streaming (e.g. TS 26 238 [76]) |
| 73 | | 56 | 300 ms (NOTE 11, NOTE 13, NOTE 15) | $10^{-8}$ | N/A | 2000 ms | "Live" Uplink Streaming (e.g. TS 26 238 [76]) |
| 74 | | 56 | 500 ms (NOTE 11, NOTE 15) | $10^{-8}$ | N/A | 2000 ms | "Live" Uplink Streaming (e.g. TS 26 238 [76]) |
| 76 | | 56 | 500 ms (NOTE 11, NOTE 13, NOTE 15) | $10^{-4}$ | N/A | 2000 ms | "Live" Uplink Streaming (e.g. TS 26 238 [76]) |
| 5 | Non-GBR (NOTE 1) | 10 | 100 ms NOTE 10, NOTE 13) | $10^{-6}$ | N/A | N/A | IMS Signalling |
| 6 | | 60 | 300 ms (NOTE 10, NOTE 13) | $10^{-6}$ | N/A | N/A | Video (Buffered Streaming) TCP-based (e.g., www, e-mail, chat, ftp, p2p file sharing, progressive video, etc) |
| 7 | | 70 | 100 ms (NOTE 10, NOTE 13) | $10^{-3}$ | N/A | N/A | Voice, Video (Live Streaming) Interactive Gaming |

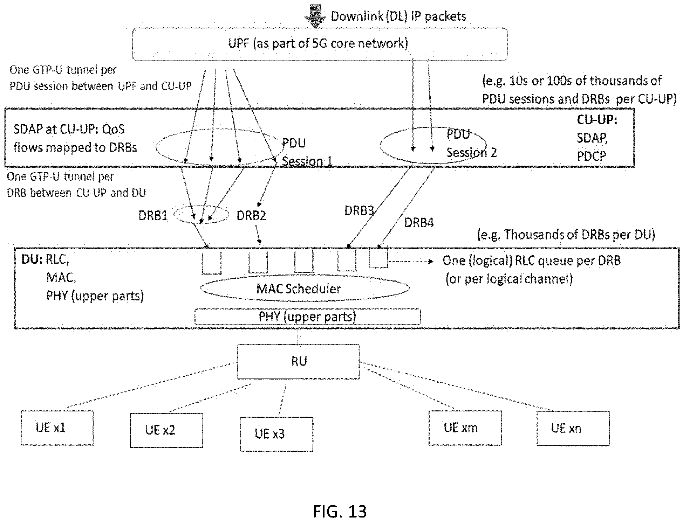

In this section, Radio Resource Management (RRM) is discussed. FIG. 13 is a block diagram illustrating RRM with a MAC Scheduler. L2 methods (such as MAC scheduler) play a role in allocating radio resources to different UEs in a cellular network. The scheduling priority of a logical channel ($P_{LC}$) is determined as part of MAC scheduler using one of the following:

$$P_{LC} = W_{5QI}*P_{5QI} + W_{GBR}*P_{GBR} + W_{PDB}* P_{PDB} + W_{PF}*P_{PF},$$

or

$$P_{LC} = (W_{5QI}*P_{5QI} + W_{PF}*P_{PF}) * maximum\ (W_{GBR}*P_{GBR}\ , W_{PDB}* P_{PDB})$$

Once one of the above methods is used to compute scheduling priority of a logical channel corresponding to a UE 101 in a cell, the same method is used for all other UEs 101.

In the above expressions, the parameters are defined as follows:

a) $P_{5QI}$ is the priority metric corresponding to the QoS class (5QI) of the logical channel. Incoming traffic from a DRB is mapped to Logical Channel (LC) at RLC level. $P_{5QI}$ is the default 5QI priority value, $Priority_{5QI}$, of a QoS flow that is mapped to the current LC. The lower the value of $Priority_{5QI}$ the higher the priority of the corresponding QoS flow. For example, Voice over New Radio (VoNR) (with 5QI of 1) has a much higher $P_{5QI}$ compared to web browsing (with 5QI of 9).

b) $P_{GBR}$ is the priority metric corresponding to the target bit rate of the corresponding logical channel. The GBR metric $P_{GBR}$ represents the fraction of data to be delivered to the UE 101 within the time left in the current averaging window $T_{avg\_win}$ (as per 5QI table, default is 2000 msec.) to meet the UE's GBR requirement. $P_{GBR}$ is calculated as follows:

$$P_{GBR} = remData/targetData$$

where

*targetData* is the total data bits to be served in each averaging window $T_{avg\_win}$ in order to meet the GFBR of the given QoS flow;

*remData* is the amount of data bits remaining to be served within the time left in the current averaging window;

$Priority_{GBR}$ is reset to 1 at the start of each averaging window $T_{avg\_win}$, and should go down to 0 towards the end of this window if the GBR criterion is met; and

$Priority_{csu}$ = 0 for non-GBR flows.

c) $P_{PDB}$ is the priority metric corresponding to the packet delay budget at DU 152 for the corresponding logical channel. $P_{PDB}$ = 1 if $PDB^{DU}$ <= $QDelay_{RLC}$ and $P_{PDB}$ = 1 / ($PDB^{DU}$ - $QDelay_{RLC}$) if $PDB^{DU}$ > $QDelay_{RLC}$ where both $PDB^{DU}$ (Packet Delay Budget at DU 152) and RLC Queuing delay, $QDelay_{RLC}$, are measured in terms of slots. $QDelay_{RLC}$ = (t $-T_{RLC}$) is the delay of the oldest RLC packet in the QoS flow that has not been scheduled yet, and it is calculated as the difference in time between the SDU insertion in RLC queue to current time where t := current time instant, $T_{RLC}$ := time instant when oldest SDU was inserted in RLC.

d) $P_{PF}$ is the priority metric corresponding to proportional fair metric of the UE 101. $P_{PF}$ is the classical PF Metric, calculated on a per UE 101 basis as $P_{PF}$ = r / $R_{avg}$
where

r: UE 101 spectral efficiency calculated based on one RB & it's last reported CQI; and
$R_{avg}$ = a.$R_{avg}$ + (1-a).b , UE's average throughput, where b>=0 is #bits scheduled in current TTI and 0 < a <= 1 is the IIR filter coefficient

e) In addition, the following weights are defined: $W_{5QI}$ is the weight of $P_{5QI}$; f) $W_{GBR}$ is the weight of $P_{GBR}$; g) $W_{PDB}$ is the weight of $P_{PDB}$; and h) $W_{PF}$ is the weight of $P_{PF}$. Each of the above weights is set to a value between 0 and 1.

Acnetwork slice is a logical network that provides specific network capabilities and network characteristics, supporting various service properties for network slice customers (e.g., as specified in 3GPP TS 28.500). A network slice divides a physical network infrastructure into multiple virtual networks, each with its own dedicated or shared resources and service level agreements. An S-NSSAI (Single Network Slice Selection Assistance Information) identifies a network slice in 5G systems. As per 3GPP TS 23.501, S-NSSAI is comprised of: i) a Slice/Service type (SST), which refers to the expected Network Slice behavior in terms of features and services; and ii) a Slice Differentiator (SD), which is optional information that complements the Slice/Service type(s) to differentiate amongst multiple Network Slices of the same Slice/Service type.

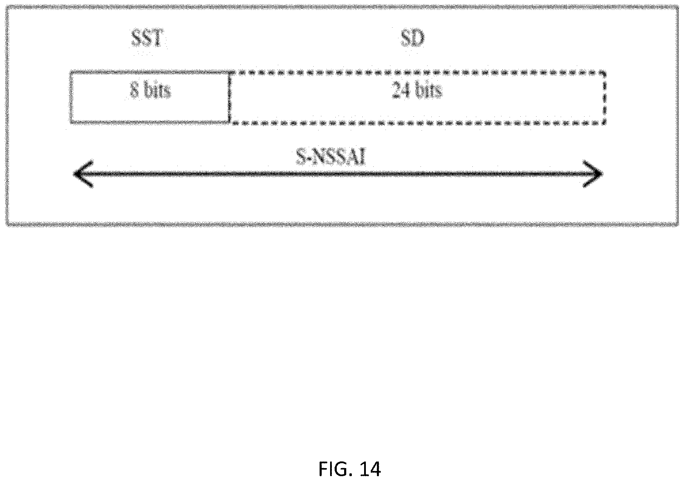

The structure of S-NSSAI is shown in FIG. 14. SST has an 8-bit field, and it can have standardized and/or non-standardized values between 0 and 255. The range of 0 to 127 corresponds to standardized SST range, and the range of 128 to 255 corresponds to operator specific range. 3GPP has standardized some SSTs, for example, SSTs for eMBB (enhanced mobile broadband), URLLC (ultra-reliable low latency communication) and MIoT (Massive Internet of Things (IoT)) slices.

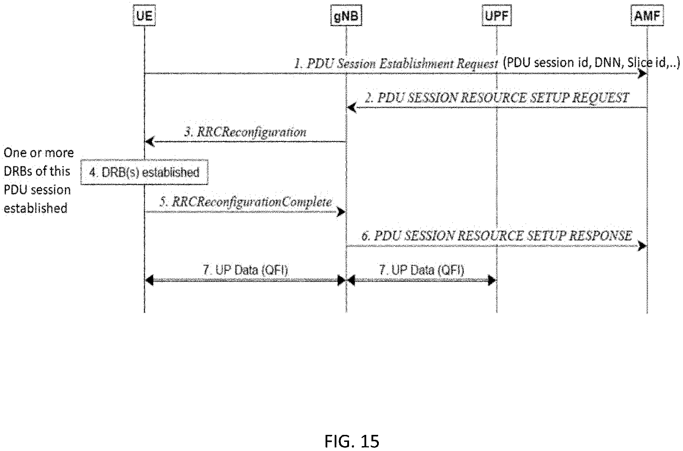

UE 101 first registers with a 5G cellular network identified by its PLMN ID (Public Land Mobile Network Identifier). UE 101 knows which S-NSSAIs are allowed in a given registration area. It then establishes a PDU session associated with a given S-NSSAI in that network towards a target Data Network (DN), such as the internet. As shown in FIG. 11, one or more QoS flows could be activated within this PDU session. UE 101 can perform data transfer using a network slice for a given data network using that PDU session. A high-level view of UE 101 establishing a PDU session with a specific DNN is shown in FIG. 15.

As described in 3GPP TS 23.501, an NSSAI is a collection of S-NSSAIs. An NSSAI can be a Configured NSSAI, a Requested NSSAI or an Allowed NSSAI. There can be up to eight S-NSSAIs in Allowed and Requested NSSAIs sent in signaling messages between the UE and the network. The Requested NSSAI signaled by the UE 101 to the network allows the network to select the Serving AMF, Network Slice(s) and Network Slice Instance(s) for this UE 101. Network Slice Instance (NSI) comprises a set of network function instances and the required resources that are deployed to serve the traffic associated with one or more S-NSSAIs.

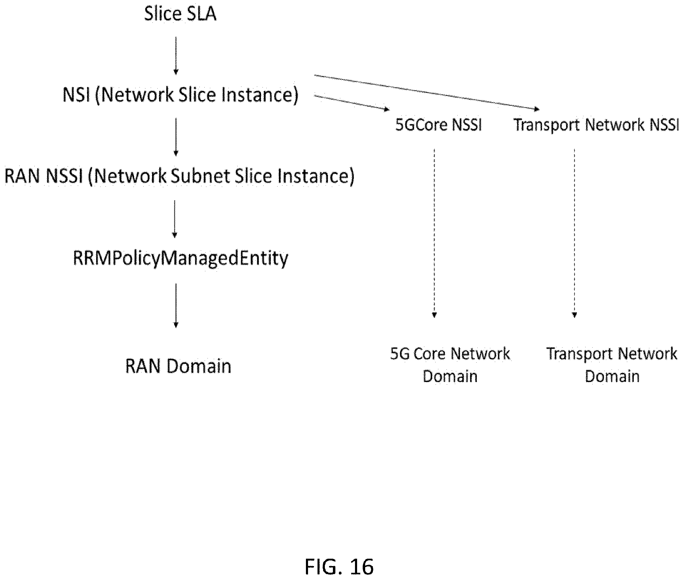

3GPP TS 28.541 includes information model definitions, referred to as Network Resource Model (NRM), for the characterization of network slices. Management representation of a network slice is realized with Information Object Classes (IOCs), named NetworkSlice and NetworkSliceSubnet, as specified in 5G Network Resource Model (NRM), 3GPP TS 28.541. The NetworkSlice IOC and the NetworkS lice Sub net IOC represent the properties of a Network Slice Instance (NSI) and a Network Slice Subnet Instance (NSSI), respectively. As shown in FIG. 16, NSI can be a single NSSI (such as RAN NSSI) or multiple NSSIs (such as RAN NSSI, 5G Core NSSI and Transport Network NSSI).

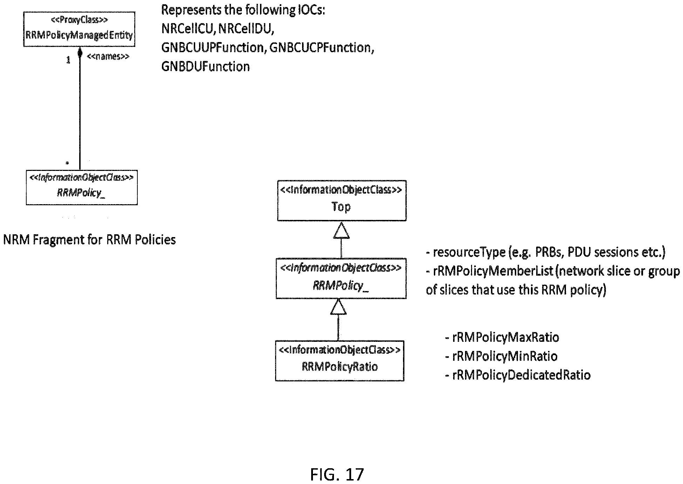

Service profile comprises attributes defined to encode the network-slice-related requirements supported by the NSI. Examples of some attributes in the service profile include: aggregate downlink throughput of a given network slice, per-UE 101 average throughput in the given network slice, and UE 101 density in a given coverage area. FIG. 17 illustrates a simplified view of the classes and attributes of 5G Network Resource Model (NRM) for resource allocation to slices, which classes and attributes are explained below.

1) The RRMPolicyManagedEntity proxy class represents the following IOCs on which RRM policies can be applied: NR Cell resources managed at CU, NR cell resources managed at DU 152, CU-UP 151up function, CU-CP 151cp function, and DU 152 function.

2) The RRMPolicy_IOC defines two attributes:

 a) resource Type attribute (such as PRBs, Number of PDU sessions, Number of RRC connected users, number of UEs 101, number of DRBs etc.).

  i) The following are standardized:

   PRB: Ratio of total PRBs available for allocation (in DU 152).

   RRC Connected Users: Ratio of total number of users within the cell (in CU-CP).

   DRB: Ratio of total number of DRBs (in CU-UP).

  ii) Other vendor-defined resources can be used (such as number of DRBs, number of UEs 101, and so on).

 b) rRMPolicyMemberList attribute: Associated network slice or group of slices for which this policy is defined.

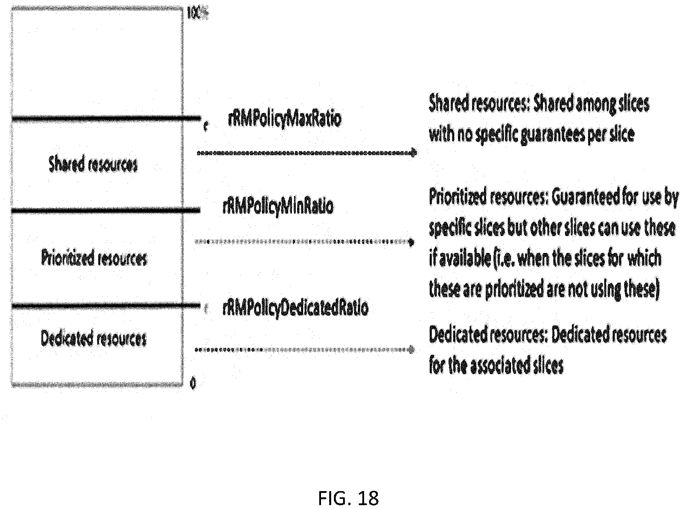

3) The RRMPolicyRatio IOC provides a resource model for distribution of resources among slices. Additional details are provided below in connection with FIG. 18, which shows the structure of RRMPolicyRatio. Three resource categories, exemplified in FIG. 18, have been defined in 3GPP TS 28.541 in connection with RRMPolicyRatio: Category I; Category II; and Category III.

Category I: The attribute *rRMPolicyDedicatedRatio* defines the dedicated resource usage quota for the *rRMPolicyMemberList,* including dedicated resources. The sum of the *rRMPolicyDedicatedRatio* values assigned to all RRMPolicyRatio(s) name-contained by the same ManagedEntity is less than or equal to 100. Dedicated resources refer to the resources which are dedicated for use by the associated *rRMPolicyMemberList.* These resources cannot be shared even if the associated *rRMPolicyMember* does not use them. The Dedicated resources quota is represented by *rRMPolicyDedicatedRatio.*

Category II: The attribute *rRMPolicyMinRatio* defines the minimum resource usage quota for the associated *rRMPolicyMemberList,* including at least one of prioritized resources and dedicated resources, i.e., *rRMPolicyMinRatio* defines the resources quota that needs to be guaranteed for use by the associated *rRMPolicyMemberList.* For the same resource type, the sum of the *rRMPolicyMinRatio* values assigned to all RRMPolicyRatio(s) name-contained by same ManagedEntity shall be less or equal 100. Prioritized resources refer to the resources which are preferentially used by the associated *rRMPolicyMemberList.* These resources are guaranteed for use by the associated *rRMPolicyMemberList* when it needs to use them. When not used, these resources can be used by other rRMPolicyMemberList(s) (i.e., the rRMPolicyMemberList(s) defined in RRMPolicyRatio(s) name-contained by the same ManagedEntity). The prioritized resources quota is represented by [*rRMPolicyMinRatio* minus *rRMPolicyDedicatedRatio*].

Category III: The attribute *rRMPolicyMaxRatio* defines the maximum resource usage quota for the associated *rRMPolicyMemberList,* including at least one of shared resources, prioritized resources and dedicated resources. For the same resource type, the sum of the *rRMPolicyMaxRatio* values assigned to all RRMPolicyRatio(s) name-contained by the same ManagedEntity can be greater than 100. Shared resources refer to the resources that are shared with other rRMPolicyMemberList(s) (i.e., the *rRMPolicyMemberList(s)* defined in RRMPolicyRatio(s) name-contained by the same ManagedEntity). The shared resources are not guaranteed for use by the associated *rRMPolicyMemberList.* The shared resources quota is represented by [*rRMPolicyMaxRatio* minus *rRMPolicyMinRatio*].

An example scenario involving the following two slices in a cell is provided:

RRM Policy Instance 1:

- S-NSSAI = x1 (for slice 1),

- rRMPolicyDedicatedRatio: 5%

- rRMPolicyMinRatio: 15%

- rRMPolicyMaxRatio: 75%

RRM Policy Instance 2:

- S-NSSAI = x2 (for slice 2)

- rRMPolicyDedicatedRatio: 8%

- rRMPolicyMinRatio: 20%

- rRMPolicyMaxRatio: 85%

For the slice with S-NSSAI x1, dedicated pool of RBs is 5%, and prioritized pool of RBs is 10%. For the slice with S-NSSAI x2, dedicated pool of RBs is 8%, and prioritized pool of RBs is 12% in the example above.

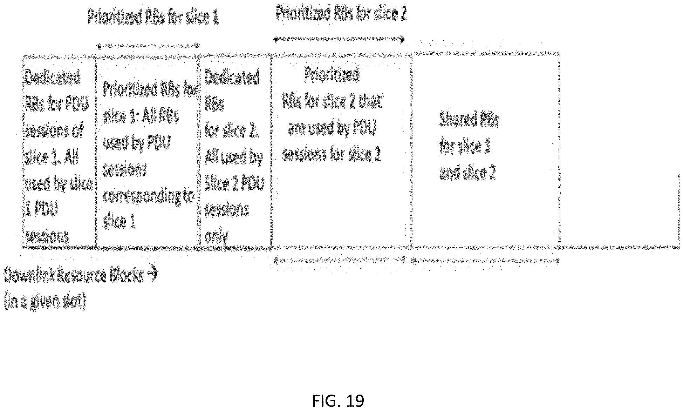

FIG. 19 illustrates an example of resource allocation for DL resource blocks, involving two slices in a cell. In the example illustrated in FIG. 19, each slice uses its share of prioritized RBs. However, in a hypothetical scenario, if a particular slice x does not use all of its prioritized RBs (for example, in the case of insufficient pending data in the PDU session corresponding to the particular slice x), the remaining RBs could be used by the other slice(s). In addition, although the example of FIG. 19 shows RBs allocated in contiguous manner, this is merely an example, and allocation of RBs need not be contiguous.

In this section, issues raised by coexistence of L4S and non-L4S traffic in 5G-type of cellular networks is discussed. As described above, radio resource management methods in 5G cellular systems are implemented as part of the MAC scheduler at the DU, for example, as shown in FIG. 13, which resource allocation methods were designed for non-L4S traffic. L4S traffic sources act in a different way compared to the non-L4S traffic sources due to the scalable congestion control mechanisms which are integrated as part of L4S traffic sources. Intermediate routers and other nodes also treat L4S traffic in a different way compared to non-L4S traffic, as previously described above. DualQ active queue management should be used at the intermediate switches or routers for co-existence of low latency and best effort traffic, so that a fair share of the bandwidth is given to each of these different traffic sources.

5G networks can have performance requirements for each logical channel as well as for 5G network slices. For the scenario in which i) a 5G network is carrying L4S as well as non-L4S traffic, and ii) at the same time, the 5G network supports network slices for certain PDU sessions (or customers), multiple operational issues are raised. One issue is how to efficiently allocate resources for L4S and non-L4S traffic in the 5G slicing environment. Another issue is how a network operator can apply different type of policies for resource management in 5G networks carrying L4S and non-L4S traffic.

Accordingly, described are implementations of an advantageous system and method to achieve enhanced resource allocation and/or management for efficient coexistence of L4S and non-L4S traffic in 5G networks, for example 5G RAN systems, supporting network slices.

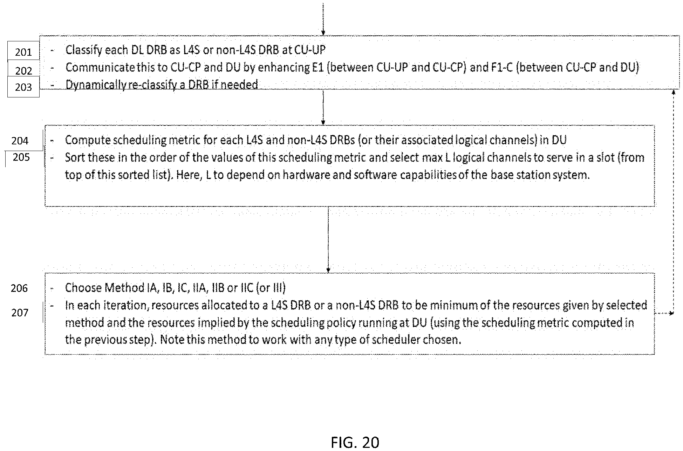

FIG. 20 is a flow diagram illustrating example methods for achieving enhanced resource allocation and/or management for efficient co-existence of L4S and non-L4S traffic in 5G networks, for example 5G RAN systems, supporting network slices. At block 201, CU-UP classifies each DL DRB as L4S or non-L4S DRB. At block 202, the classification from the first block is communicated to CU-CP and DU by enhancing E1 interface exchange (between CU-UP and CU-CP) and F1-C interface exchange (between CU-CP and DU). In addition, at block 203 a DRB can be dynamically reclassified if needed. At block 204, DU computes scheduling metric values for each L4S and non-L4S DRBs (or for their associated logical channels). At block 205, the computed scheduling metric values are sorted in the order of the values, and maximum L logical channels with the highest values of the scheduling metric are selected to serve in a slot (in this example, L depends on hardware and software capabilities of the base station system). At block 206, one of the example methods (to be described in further detail below, with exemplary Methods 1A, 1B, 1C, 2A, 2B, 2C, or 3) is selected. At block 207, in each iteration of the selected method, resources are allocated to an L4S DRB or a non-L4S DRB to be minimum of the resources given by the selected method and the resources implied by the scheduling policy being implemented at the DU (using the scheduling metric computed in at block 204). The above-described blocks can be implemented with any type of scheduler.

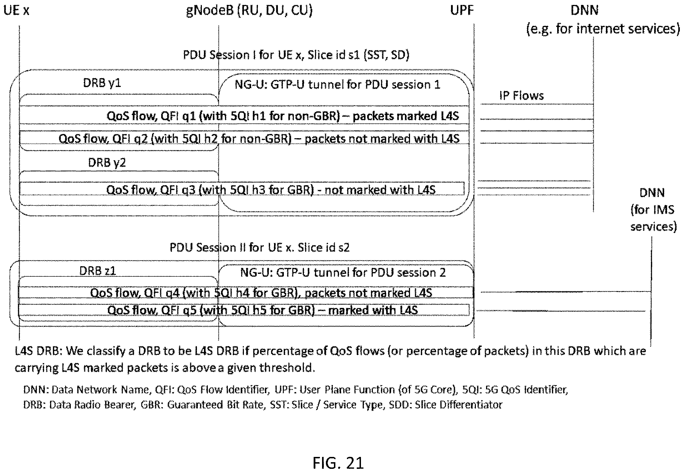

A first example method (Method 1) according to the present disclosure involves a scenario in which a particular UE wants to access one or more application servers via the internet (or with a different Data Network) and establishes a PDU session, for example, as shown in FIG. 15. These application servers may or may not be supporting L4S-based scalable congestion control, and the UE does not have this information at the time of establishment of the PDU session. Each PDU session of the UE can also be associated with a different slice (for example, one PDU session of a UE could be associated with one eMBB slice, and another PDU session of the UE could be associated with another eMBB slice). As application servers start sending packets to the UE in downlink (DL) direction, i) UPF (User Plane Function), as part of 5G core network, maps IP flows to QFIs, and ii) SDAP, as part of CU-UP at 5G gNodeB, maps QFIs to DRBs. An example of this scenario is shown in FIG. 21. In this example, UE x is supporting 2 PDU sessions at a given time. PDU session I includes DRB y1 and DRB y2. DRB y1 carries traffic for QoS flows (with QoS Flow identifiers (QFIs)) q1 and q2. DRB y2 carries traffic for QoS flow with QFI q3. PDU session II comprises DRB z1, which carries traffic for QoS flows with QFIs q4 and q5. In the example shown in FIG. 21, i) QoS flow with QFI q1 (which is part of DRB y1) is carrying L4S packets, ii) QoS flow with QFI q5 (which is part of DRB z1) is carrying L4S packets, and iii) other QoS flows shown in FIG. 21 are carrying non-L4S packets.

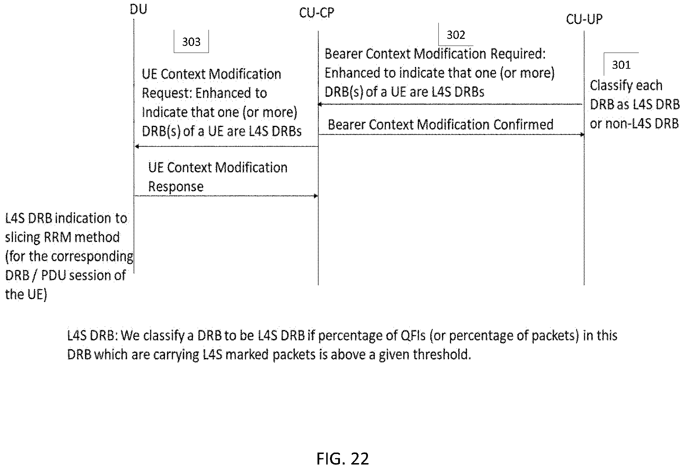

For this example method (Method 1), a DRB is classified as an L4S DRB for which the percentage of QoS flows in that DRB that are carrying traffic from L4S sources is at least above a given, specified threshold percentage. Alternatively, a DRB is classified as an L4S DRB for which the percentage of packets in that DRB which are from L4S traffic sources is at least above a given, specified threshold percentage. As shown in FIG. 22, at block 301, this classification is performed at CU-UP for each downlink DRB (for each PDU session). If a DRB is classified as L4S DRB, at block 302 CU-UP informs CU-CP with an enhanced "Bearer Context Modification Required" message over the E1 interface between CU-UP and CU-CP, and at block 303 CU-CP informs DU with enhanced "UE Context Modification Request" message between CU-CP and DU over the F1 interface.

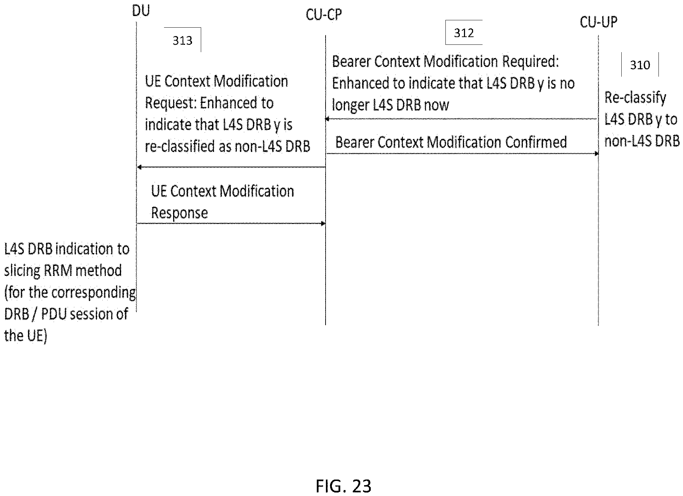

In some instances, a DRB y (e.g., y1) can be classified as L4S DRB based on a percentage of QoS flows carrying L4S traffic or percentage of packets carrying L4S traffic at a given time instant. At a later point of time, some of these L4S QoS flows can stop carrying data and percentage of QoS flows carrying L4S traffic in that DRB can go below a prespecified threshold. In that case, at shown in FIG. 23, at block 310 this L4S DRB is reclassified as non-L4S DRB. As a DRB is re-classified to another category, at block 312 CU-UP informs CU-CP with enhanced "Bearer Context Modification Required" message over the E1 interface between CU-UP and CU-CP, and at block 313 CU-CP informs DU with enhanced "UE Context Modification Request" message between CU-CP and DU over the F1 interface, as shown in FIG. 23.

For each time interval (for example, in each slot), gNodeB is configured to distribute resources among multiple slices to comply with rules associated with dedicated / prioritized and shared resources as described in the above section discussing network slicing. At the same time, 5G system is configured to meet per-slice and per-DRB SLAs (Service Level Agreements) in addition to providing mechanisms for fair co-existence of L4S and non-L4S traffic. Computation of a scheduling metric for L4S and non-L4S DRBs (i.e., their associated logical channels) can be performed as follows: For a non-L4S DRB (and associated logical channel), the priority of a LC, $P_{LC}^{non-L4S}$, is determined as part of the MAC scheduler for that cell (at the DU) as described in the above section discussing RRM methods. For example, a method includes:

$$P_{LC}^{non-L4S} = (W_{5QI}*P_{5QI} + W_{PF}*P_{PF}) * \text{maximum} (W_{GBR}*P_{GBR}, W_{PDB}*P_{PDB}^{non-L4S})$$

Alternatively, other methods can be utilized, e.g.:

$$P_{LC}^{non-L4S} = (W_{5QI}*P_{5QI} + W_{PF}*P_{PF}) + W_{GBR}*P_{GBR} + W_{PDB}*P_{PDB}^{non-L4S}$$

For an L4S DRB (and the associated logical channel), a priority of a LC (denoted as $P_{LC}^{L4S}$) can be computed as follows:

$$P_{LC}^{L4S} = (WL4S_{5QI} * W_{5QI}*P_{5QI} + WL4S_{PF} * W_{PF}*P_{PF}) * \text{maximum} (WL4S_{GBR} * W_{GBR}*P_{GBR},$$
$$WL4S_{PDB} * W_{PDB}*P_{PDB}^{L4S}).$$

This computation uses additional weights, $WL4S_{5QI}$, $WL4S_{GBR}$, $WL4S_{PDS}$ and $WL4S_{PF}$, and an updated priority metric, $P_{PDB}^{L4S}$, for L4S DRBs are used to implement different types of policy-based decisions.

Alternatively, other methods can be utilized, for example:

$$P_{LC}^{L4S} = (WL4S_{5QI} * W_{5QI}*P_{5QI} + WL4S_{PF} * W_{PF}*P_{PF}) + WL4S_{GBR} * W_{GBR}*P_{GBR} + WL4S_{PDB} *$$
$$W_{PDB}*P_{PDB}^{L4S}$$

The scheduling metric (or priority) of each L4S and non-L4S DRB (i.e., for the associated logical channel) is computed as outlined above, and the computed scheduling metric is arranged in descending order of their priority values. In general, a logical channel with a higher value of scheduling metric is served before an LC with a lower value of scheduling metric. According to the present disclosure, this approach for a 5G system is enhanced when it is supporting a mix of L4S and non-L4S traffic.

In this section, example Method 1A for resource allocation among L4S and non-L4S logical channels is described. In the example Method 1A, DU considers L4S as well as non-L4S logical channels with data to serve in a given time slot and picks up maximum L logical channels with the highest values of the scheduling metric (where the scheduling metric for these channels is computed as described above). The value of L can depend on the hardware and software capabilities of the base station. For example, L could be 16 in a base station, and this indicates that maximum 16 logical channels can be served in a given slot. For each logical channel in the sorted list of L logical channels in a slot, and with resources (i.e., RBs) available for the corresponding slice in that slot, DU allocates resources to these L logical channels (LCs) as follows:

*First iteration for selected LC (from the above sorted list of LCs) in a given slot:*

1) If the selected LC is an L4S LC, DU tries to serve maximum amount of data for the selected L4S LC (or the corresponding L4S DRB) using available dedicated, prioritized and shared resources for the corresponding slice. DU first assigns available RBs from the pool of "dedicated" resources for the associated slice (if any such RBs available in the pool of dedicated RBs for the corresponding slice). If this L4S LC can utilize more resources (for example, it has more data pending) in the same time slot, DU assigns available resources (or RBs) from the pool of "prioritized" resources for the associated slice (if any such prioritized RBs available for the corresponding slice). If this L4S LC can still use more resources in the same time slot, DU assigns resources from the pool of shared resources for that slice.

2) If the selected LC is non-L4S LC, DU assigns resources only from the dedicated and the prioritized pools of RBs for the corresponding slice in the first iteration for a given time slot for this LC. It does not assign RBs from the shared pool of RBs for non-L4S LCs in the first iteration.

After performing the above, DU picks up the LC with the next highest value of scheduling metric and repeats the above process for the first iteration. It continues to do this until all available resources from the dedicated and prioritized pool of all slices are utilized to the maximum extent possible or above steps have been applied for all the selected L logical channels. Some of the L4S logical channels can also be allocated shared resources in the first iteration as explained above, but non-L4S LCs are not allocated shared resources in the first iteration above.

*Second iteration of resource allocation in a given slot:*

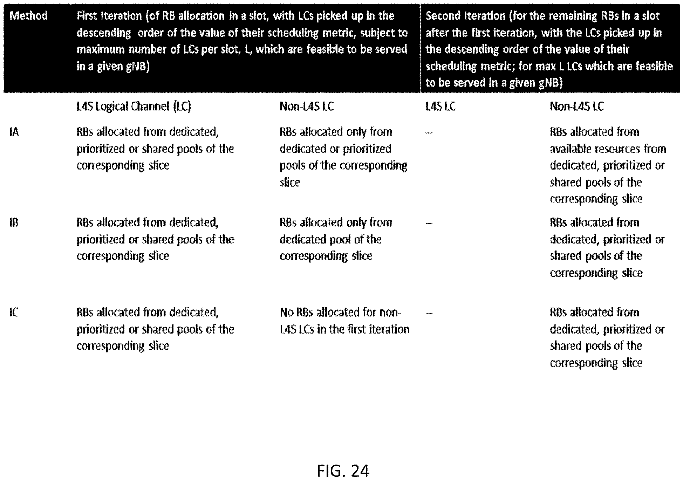

If some RBs are still available in the given time slot, a second iteration for allocating these RBs to different logical channels is performed. DU considers the set of non-L4S LCs which were considered in the first iteration and which still have more data in their queues to be served. DU considers the set of these LCs in the descending order of the value of their scheduling priorities, and DU allocates RBs subject to constraints on RBs for the corresponding slices (in terms of dedicated, prioritized and shared resources). In this second iteration, non-L4S LCs are also allocated RBs from the available RBs from the dedicated, prioritized and shared quota of the corresponding slice. Method 1A, among other methods, is summarized in FIG. 24.

In this section, example Method 1B for resource allocation among L4S and non-L4S logical channels is described. In the example Method 1B, DU considers L4S as well as non-L4S logical channels with data to serve in a given time slot and picks up maximum L logical channels with the highest values of the scheduling metric (where the scheduling metric for these channels is computed as described above). For each logical channel in the sorted list of L logical channels in a slot, and with resources (that is, RBs) available for the corresponding slice in that slot, DU allocates resources to these L logical channels (LCs) as follows:

*First iteration of resource allocation for (maximum L) LCs in a given slot:*

1) If the selected LC is an L4S LC, DU tries to serve maximum amount of data for the selected L4S LC (or the corresponding L4S DRB) using available dedicated, prioritized and shared resources for the corresponding slice.

2) If the selected LC is non-L4S LC, DU assigns resources only from the dedicated pool of RBs for the corresponding slice in the first iteration for a given time slot for this LC. It does not assign RBs from the prioritized or shared pool of RBs for non-L4S LCs in the first iteration.

After performing the above, DU picks up the LC with the next highest value of scheduling metric and repeats the above process for the first iteration. DU continues to do this until all available resources from the dedicated and prioritized pool of all slices are utilized to the maximum extent possible or above steps have been applied for all the selected L logical channels. Thus, L4S as well as non-L4S LCs are allocated RBs from the dedicated pool of resources in the first iteration. Some of the L4S logical channels can also be allocated prioritized and shared resources in the first iteration as explained above, but non-L4S LCs are not allocated prioritized or shared resources in the first iteration above.

*Second iteration of resource allocation for LCs in a given slot:*

If some RBs are still available in the given slot, a second iteration for allocating these RBs to different logical channels is performed. Here, DU considers the set of non-L4S LCs which were considered in the first iteration and which still have more data in their queues to be served. DU considers the set of LCs in the same order as in the first iteration, and allocates RBs subject to constraints on RBs for the corresponding slices. In this second iteration, non-L4S LCs are allocated RBs from the available resources from the dedicated, prioritized or shared quota of the corresponding slice. Method 1B, among other methods, is summarized in FIG. 24.

In another example method, Method 1C, which (among other Methods) is summarized in FIG. 24, the following iterations are performed:

1) In the first iteration of the method, L4S LCs are given RBs from dedicated, prioritized or shared pool of RBs from the corresponding slice, but non-L4S LCs are not allocated any RBs in the first iteration.

2) In the second iteration of the method, non-L4S LCs are allocated RBs from dedicated, prioritized and shared pools of RBs.

In another example method according to the present disclosure, referred to as Method 1D, switching among Methods 1A, 1B and 1C can be implemented. Referring to FIG. 24, which summarizes Methods 1A, 1B and 1C, in moving from Method 1A to Method 1B to Method 1C, higher preference is given to L4S LCs compared to non-L4S LCs. According to Method 1D, different suitable methods can be chosen based on the policies of the network operator. For example, Method 1A can be chosen during initial deployments, and as L4S traffic increases in the network, the network operator can switch to Method 1B. Once the network is mainly carrying L4S traffic and a low level of non-L4S traffic, the network operator can switch to Method 10. Alternatively, Method 1A can be used over a time interval when the proportion of L4S users is below a specified threshold (for example, threshold-1), and can subsequently switch to Method 1B for a time interval when the proportion of L4S users increases (for example, the proportion is between threshold-1 and threshold-2). Finally, a switch to Method 1C can be made when the proportion of L4S users is above threshold-2. In this example, threshold-2 is greater than threshold-1, and each of these thresholds are between zero and one. Note that in most of the cases, resources can be typically fully utilized by the L4S and the non-L4S DRBs in the first two iterations of Method 1A, 1B or 1C. If there are any resources remaining after these two iterations, the remaining resources can optionally be given to delay-sensitive or any other DRBs.

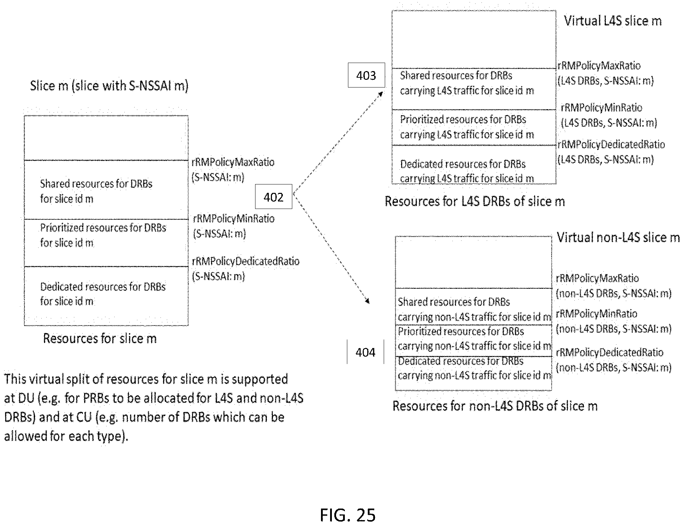

In the following sections, multiple sub-variants of example Method 2 are disclosed. As described below, Method 2 addresses coexistence of L4S and non-L4S traffic using virtual L4S and non-L4S slices. In Method 2, each DRB is classified as L4S DRB or non-L4S DRB as in the previous example Methods. In addition, split resources are split for each slice into resources for two virtual slices, for example, as shown in FIG. 25. As shown in FIG. 25, at block 402 resources for a slice with S-NSSAI m are split into resources for two virtual slices, that is, at block 403 one virtual slice for L4S DRBs (called virtual L4S slice m) and at block 404 another virtual slice for non-L4S DRBs (called virtual non-L4S slice m). These virtual slices exist at the gNB level and are used for managing resources for L4S and non-L4S DRBs for slice (with S-NSSAI m) in the gNB. Different types of resources are split as follows:

1) Dedicated resources for virtual L4S slice m and virtual non-L4S slice m: These resources are split (e.g., based on customer policies) such that the sum of dedicated resources for virtual L4S slice m (corresponding to L4S traffic of slice with S-NSSAI m) and dedicated resources for virtual non-L4S slice m (corresponding to non-L4S traffic of slice with S-NSSAI m) are equal to the dedicated resources for slice with S-NSSAI m (for each slice m).

2) Prioritized resources for virtual L4S slice m and virtual non-L4S slice m: The sum of prioritized resources for virtual L4S slice m and prioritized resources for virtual non-L4S slice m are equal to the prioritized resources for slice with S-NSSAI m (for each slice m).

3) Shared resources for slice with S-NSSAI m are split into shared resources for virtual L4S slice m and virtual non-L4S slice m in a manner similar to the prioritized resources as described above.

The splitting ratio can be configured by a network operator (and a suitable data model can be enhanced for this purpose). For example, an operator can configure the following: 1) 40% of dedicated resources of a slice to be given for L4S DRBs, and 60% of resources of this slice for non-L4S DRBs; and 2) 70% of prioritized resources of the corresponding slice to be given for virtual L4S slice, and 30% for virtual non-L4S slice. In this case, preferential treatment is given to L4S DRBs for shared resources, and splitting-ratio-based treatment is applied for dedicated and prioritized pool of RBs. This specific example case is described below in further detail as Method 2A.

In another example case of the splitting ratio, a network operator can specify the splitting ratio for dedicated resources only. In this case, preferential treatment is given to L4S DRBs for prioritized and shared resources, and splitting-ratio-based treatment is applied for dedicated pool of resources. This specific example case is described below in further detail as Method 2B.

In another example case of the splitting ratio, a network operator can specify dedicated resources for virtual L4S slice, and set dedicated resources for non-L4S slice to be zero in the corresponding slice. In this case, preferential treatment is given to L4S DRBs for dedicated, prioritized and shared pool of resources. This specific example case is described below in further detail as Method 2B.

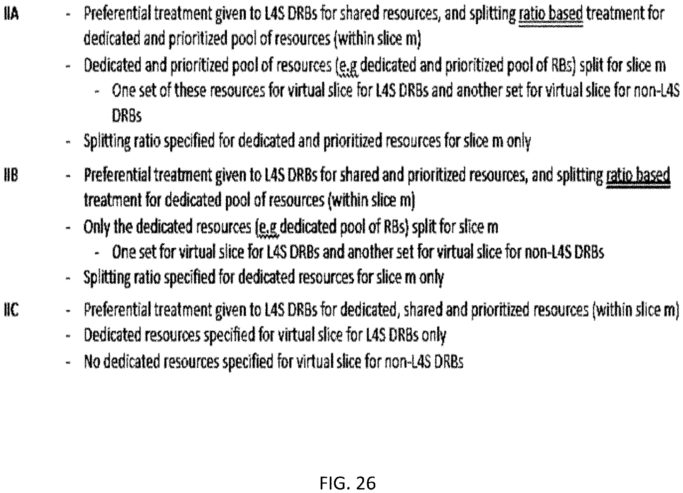

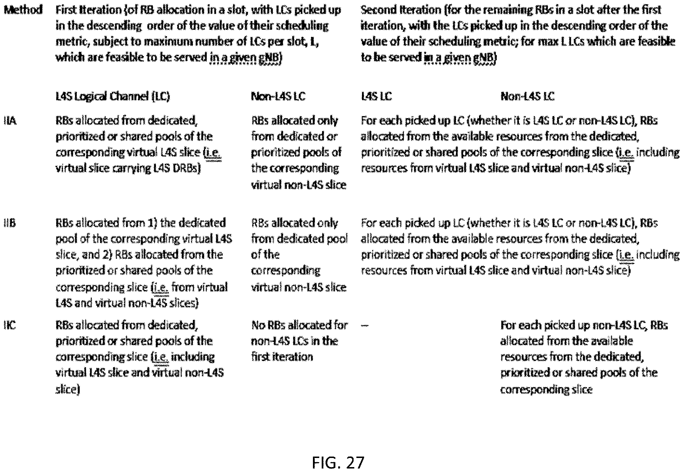

In this section, the first sub-variant of Method 2, which is referred to as example Method 2A (illustrated, along with other sub-variants, in FIG. 26 and FIG. 27), for resource allocation among L4S and non-L4S logical channels is described. In the example Method 2A, DU considers L4S as well as non-L4S logical channels with data to serve in a given time slot and picks up maximum L logical channels with the highest values of the scheduling metric (where the scheduling metric for these channels is computed as described above). For each logical channel in the sorted list of L logical channels in a slot, and with resources (i.e., RBs) available for the corresponding slice in that slot, DU allocates resources to these L logical channels (LCs) as follows:

*First iteration of resource allocation for (maximum L) LCs in a given slot:*

1) If the selected LC is an L4S LC, DU tries to serve maximum amount of data for the selected L4S LC (or the corresponding L4S DRB) using *available dedicated, prioritized and shared* resources for the corresponding *virtual L4S slice.*

2) If the selected LC is a non-L4S LC, DU assigns resources from the *dedicated and prioritized pool* of RBs for the corresponding *virtual non-L4S slice* in the first iteration for a given time slot for this LC. It doesn't assign RBs from the shared pool of RBs for non-L4S LCs in the first iteration.

After performing the procedure above, DU picks up the LC with the next highest value of scheduling metric and repeats the above process for the first iteration. DU continues to do this until all available resources from the dedicated and prioritized pool of all slices are utilized to the maximum extent possible or the above steps have been executed for L logical channels. Thus, L4S and non-L4S LCs are allocated RBs from the dedicated and prioritized pool of resources in the first iteration from their respective virtual slices (i.e., virtual L4S and virtual non-L4S slices). Some of the L4S logical channels can also be allocated shared resources in the first iteration as explained above, but non-L4S LCs are not allocated shared resources in the first iteration.

*Second iteration of resource allocation for LCs in a given slot:*

If some RBs are still available in the given slot, a second iteration for allocating these RBs to different logical channels is performed. Here, DU considers the set of all the LCs (i.e., L4S and non-L4S LCs) which were considered in the first iteration and which still have more data in their queues to be served. DU considers the set of LCs in the same order as in the first iteration, and LCs are again picked up in the descending order of the value of their scheduling metric. For each picked up LC (whether it is an L4S LC or a non-L4S LC), RBs are allocated from the dedicated, prioritized and shared pool of RBs for the corresponding slice (i.e., including available resources from the virtual L4S and virtual non-L4S slices).

In this section, the second sub-variant of Method 2, which is referred to as example Method 2B (illustrated, along with other sub-variants, in FIG. 26 and FIG. 27), for resource allocation among L4S and non-L4S logical channels will be described. In the example Method 2B, DU considers L4S as well as non-L4S logical channels with data to serve in a given time slot and picks up maximum L logical channels with the highest values of the scheduling metric (where the scheduling metric for these channels is computed as described above). For each logical channel in the sorted list of L logical channels in a slot, and with resources (i.e., RBs) available for the corresponding slice in that slot, DU allocates resources to these L logical channels (LCs) as follows:

*First iteration of resource allocation for (maximum L) LCs in a given slot:*

1) If the selected LC is an L4S LC, DU tries to serve maximum amount of data for the selected L4S LC (or the corresponding L4S DRB) using available resources from i) RBs from dedicated pool for virtual L4S slice, and ii) RBs from prioritized and shared pools for virtual L4S and virtual non-L4S slice.

2) If the selected LC is a non-L4S LC, DU assigns resources only from the *dedicated pool* of RBs for the corresponding *virtual non-L4S slice* in the first iteration for a given time slot for this LC.

After performing the above, DU picks up the LC with the next highest value of scheduling metric and repeats the above process for the first iteration, and so on.

*Second iteration of resource allocation for LCs in a given slot:*

If some RBs are still available in the given slot, a second iteration for allocating these RBs to different logical channels is performed. Here, DU considers the set of all the LCs (that is, L4S and non-L4S LCs) which were considered in the first iteration and which still have more data in their queues to be served. DU considers the set of LCs in the same order as in the first iteration, and LCs are again picked up in the descending order of the value of their scheduling metric. For each picked up LC (whether it is an L4S LC or a non-L4S LC), RBs are allocated from the dedicated, prioritized and shared pool of RBs for the corresponding slice (that is, including available resources from the virtual L4S and virtual non-L4S slices).

In this section, the third sub-variant of Method 2, which is referred to as example Method 2C (illustrated, along with other sub-variants, in FIG. 26 and FIG. 27), for resource allocation among L4S and non-L4S logical channels will be described. In the example Method 2C, DU considers L4S as well as non-L4S logical channels with data to serve in a given time slot and picks up maximum L logical channels with the highest values of the scheduling metric (where the scheduling metric for these channels is computed as described above). For each logical channel in the sorted list of L logical channels in a slot, and with resources (that is, RBs) available for the corresponding slice in that slot, DU allocates resources to these L logical channels (LCs) as follows:

*First iteration of resource allocation for (maximum L) LCs in a given slot:*

1) If the selected LC is an L4S LC, DU tries to serve maximum amount of data for the selected L4S LC (or the corresponding L4S DRB) using available resources from *dedicated, prioritized and shared* resources from virtual L4S slice and virtual non-L4S slice.

2) If the selected LC is a non-L4S LC, DU does not assigns any resources to it in the first iteration.

After performing the above, DU picks up the LC with the next highest value of scheduling metric and repeats the above process for the first iteration, and so on.

*Second iteration of resource allocation for LCs in a given slot:*

If some RBs are still available in the given slot, a second iteration for allocating these RBs to different logical channels is performed. Here, DU considers the set of non-L4S LCs which were considered in the first iteration and which still have more data in their queues to be served. DU considers the set of LCs in the same order as in the first iteration, and LCs are again picked up in the descending order of the value of their scheduling metric. For each picked up non-L4S LC, RBs are allocated from the dedicated, prioritized and shared pool of RBs for the corresponding slice (that is, including available resources from the virtual L4S and virtual non-L4S slices).

It should be noted that in most of the cases, resources will be typically fully utilized by the L4S and the non-L4S DRBs in the first two iterations of Method 2A, 2B or 2C. If there are any resources remaining after these two iterations, the remaining resources can optionally be given to delay-sensitive or any other DRBs.

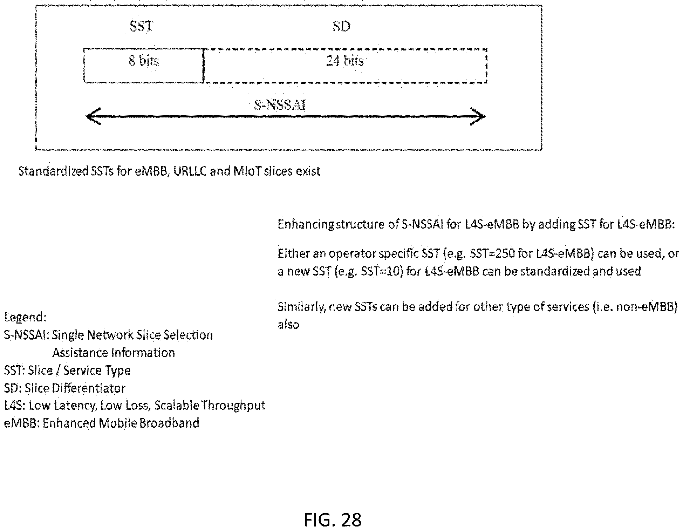

In the following section, example Method 3 is discussed, which Method 3 addresses coexistence of L4S and non-L4S traffic. As L4S services get deployed in the internet, an increasing number of application servers and intermediate nodes start supporting L4S services. With this, Domain Name Service (DNS) (see, for example., IETF RFC 1034, and RFC 1035) servers in the internet can be enhanced to keep track of whether or not a server is supporting L4S services. When a UE contacts a DNS server to convert a web address to an IP address, the UE can find out whether or not the corresponding L4S server is supporting L4S services. It is also possible for the UE to build its own database for some of the frequently accessed application servers and keep track of whether or not those servers support L4S services. If the UE knows that a specific application server supports L4S services, and the intermediate nodes in that area also support L4S services, the UE can ask for an L4S-eMBB slice instead of an eMBB slice when the UE establishes a PDU session in the 5G network. If the UE knows that a specific application server supports L4S services, but does not know whether the intermediate nodes in that path also support L4S services, the UE can still ask for an L4S-eMBB slice instead of an eMBB slice when it establishes a PDU session in the 5G network. In this case, L4S services are supported in the 5G RAN system using the method as described herein. As shown in FIG. 28, new Slice/Service Type (SST) is added for L4S-eMBB slices. This SST can be in standardized range or in operator-specific range.

The various sub-variants of Method 1 (Methods 1A-1D) considered the scenario where L4S as well as non-L4S QFIs can be mapped to the same DRB (e.g., with gNB products without changing the CU-UP software). Each such DRB (and its PDU session) is associated with a slice in 5G networks, and methods are described herein to allocate resources for L4S and non-L4S DRBs at the DU. In addition, in the various subs-variants of Method 2 (Methods 2A-2C), SDAP (as part of CU-UP) carries out classification such that each DRB carries either L4S QFIs or non-L4S QFIs (but not QFIs of both types). This can be implemented since CU-UP software is enhanced to support these features. Resources are split for each slice between a virtual L4S slice and a virtual non-L4S slice, and methods as described herein provide for co-existence of L4S and non-L4S traffic in this 5G system.

For Method 3, in the initial deployments, 5G gNB can use one or more of the example Methods 1A-1D, and gNB-DU can be enhanced for this purpose (as described in connection with Methods 1A-1D). As L4S services become more widespread, a network operator can upgrade gNB-DU and gNB-CU to deploy one or more of the example Methods 2A-2C. As deployment of L4S services continue to increase, a network operator can deploy the example Method 3.

While the present disclosure has been described with reference to one or more exemplary embodiments, it will be understood by those skilled in the art that various changes can be made and equivalents can be substituted for elements thereof without departing from the scope of the present disclosure. For example, although the example methods have been described in the context of 5G cellular networks, the example methods are equally applicable for 4G and other similar wireless networks. In addition, many modifications may be made to adapt a particular situation or material to the teachings of the disclosure without departing from the scope thereof. Therefore, it is intended that the present disclosure not be limited to the particular embodiments disclosed, but that the disclosure will include all embodiments falling within the scope of the appended claims.

It will be understood that implementations and embodiments can be implemented by computer program instructions. These program instructions can be provided to a processor to produce a machine, such that the instructions, which execute on the processor, create means for implementing the actions specified herein. The computer program instructions can be executed by a processor to cause a series of operational steps to be performed by the processor to produce a computer-implemented process such that the instructions, which execute on the processor to provide steps for implementing the actions specified. Moreover, some of the steps can also be performed across more than one processor, such as might arise in a multi-processor computer system or even a group of multiple computer systems. In addition, one or more blocks or combinations of blocks in the flowchart illustration can also be performed concurrently with other blocks or combinations of blocks, or even in a different sequence than illustrated without departing from the scope or spirit of the disclosure.

**Claims**

1. A method for resource allocation for optimizing coexistence of low latency, low loss and scalable throughput (L4S) traffic and non-L4S traffic in a 5G network wireless system, comprising:

   classifying, by a centralized unit - user plane (CU-UP), each downlink (DL) data radio bearer (DRB) as one of L4S DRB or non-L4S DRB;
   communicating the classification result to a centralized unit - control plane (CU-CP) and a distributed unit (DU);
   computing, by the DU, a scheduling metric value for each L4S DRB and non-L4S DRB;
   sorting the computed scheduling metric values in the order of the values;
   selecting a maximum specified L number of logical channels (LC) with the highest values of the scheduling metric to serve in a slot; and
   performing at least one of the following:

      i) performing, at the DU, resource allocation for L4S DRBs and non-L4S DRBs, wherein the DU is configured to map L4S Quality of Service Flow Identifiers (QFIs) and non-L4S QFIs to the same DRB, and each DRB is associated with a slice in the 5G wireless system; and
      ii) splitting, at the DU, resources for each slice into resources for two virtual slices including one virtual slice for L4S DRBs and another virtual slice for non-L4S DRBs.

2. The method of claim 1, further comprising:
   enhancing an E1 interface exchange between CU-UP and the CU-CP and an enhancing F1-C interface exchange between CU-CP and DU for communicating the classification result to the CU-CP and the DU.

3. The method of claim 1, wherein the selecting a maximum specified L number of LC with the highest values of the scheduling metric to serve in a slot comprises:

   classifying the DRB as the L4S DRB for which a percentage of a QoS flow in that DRB that are carrying L4S traffic from L4S sources is at least above a predetermined threshold percentage; and
   if at a later time the percentage of QoS flow L4S traffic goes below the predetermined threshold, the L4S DRB is re-classifying the DRB as the non-L4S DRB.

4. The method of claim 1, wherein the resources are spilt into one or more of:

   dedicated resources for the virtual L4S slice and the virtual non-L4S slice;
   prioritized resources for the virtual L4S slice and the virtual non-L4S slice; or
   for a slice with a S-NSSAI, shared resources for the virtual L4S slice m and the virtual non-L4S slice,
   wherein the method preferably further comprises:

allocating resources for L4S DRBs, non-L4S DRBs, or both by selecting a maximum specified L number of LC with the highest values of the scheduling metric to serve in a slot in a first iteration; and
allocating resources for any remaining non-L4S DRBs by selecting the maximum specified L number of different LC with the highest values of the scheduling metric to serve in the slot in a second iteration.

5. The method of claim 4, wherein the selecting a maximum specified L number of LC with the highest values of the scheduling metric to serve in a slot comprises:

if a selected LC is a L4S LC, attempting, by the DU, to serve the maximum amount of data using the dedicated resources, the prioritized resources, and the shared resources;
the method preferably further comprising

first assigning, by the DU, available RBs from a pool of the dedicated resources for the L4S slice;
if the L4S LC can utilize more of the resources in a same time slot, assigning by the DU any available RBs from a pool of the prioritized resources for the L4S slice;
if the L4S LC can utilize more of the resources in a same time slot, assigning by the DU any available RBs from a pool of the shared resources for the L4S slice; and
repeating the process with a next LC with a next highest value of scheduling metric.

6. The method of claim 5, wherein the selecting a maximum specified L number of LC with the highest values of the scheduling metric to serve in a slot preferably comprising, if a selected LC is a non-L4S LC, attempting, by the DU, to serve the maximum amount of data using only the dedicated resources and the prioritized resources;

assigning, by the DU, available RBs from a pool of the dedicated resources for the non-L4S slice;
if the non-L4S LC can utilize more of the resources in a same time slot, assigning by the DU any available RBs from a pool of the prioritized resources for the non-L4S slice; and
repeating the process with a next LC with a next highest value of scheduling metric;

7. The method of claim 5, wherein the selecting a maximum specified L number of LC with the highest values of the scheduling metric to serve in a slot comprises:

if a selected LC is a non-L4S LC, attempting, by the DU, to serve the maximum amount of data using only the dedicated resources; and the method preferably comprising
assigning, by the DU, available RBs from a pool of the dedicated resources for the non-L4S slice; and
repeating the process with a next LC with a next highest value of scheduling metric.

8. The method of claim 4, further comprising:
allocating no non-L4S DRBs to the non-L4S LCs in the first iteration.

9. The method of claim 4, wherein the selecting a maximum specified L number of LC with the highest values of the scheduling metric to serve in a slot comprises:

identifying a set of non-L4S LCs assigned in the first iteration that have more queue data to be served and selecting the non-L4S LCs from the set in the descending order of the value of scheduling priorities, and
allocating, by the DU, the non-L4S LCs using the dedicated resources, the prioritized resources, and the shared resources.

10. The method of claim 4, wherein the method comprises allocating the non-L4S DRBs to the non-L4S LCs by in the first iteration by one or more of:

a) attempting, by the DU, to serve the maximum amount of data using only the dedicated resources and/or the prioritized resources;
b) attempting by the DU, to serve the maximum amount of data using only the dedicated resources;
c) allocating no non-L4S DRBs to non-L4S LCs in the first iteration;

wherein the method preferably comprises:

selecting allocation a) when a proportion of L4S users is below a first threshold;

switching to allocation b) when the proportion of L4S users increases to and above the first threshold; and switching to allocation c) when the proportion of L4S users increases to and above a second first threshold greater than the first threshold.

11. The method of claim 4, further comprising: switching the allocation as a function of L4S and non-L4S network traffic.

12. The method of claim 4, further comprising:

splitting the dedicated resources for the virtual L4S slice and the virtual non-L4S slice such that a sum of dedicated resources for the virtual L4S slice m, which corresponds to L4S traffic of the slice with S-NSSAI m, and the dedicated resources for the virtual non-L4S slice m, which corresponds to non-L4S traffic of the slice with S-NSSAI m, are equal to the dedicated resources for slice with S-NSSAI m for each slice m;
splitting the prioritized resources for the virtual L4S slice and the virtual non-L4S slice such that a sum of the prioritized resources for the virtual L4S slice m and the prioritized resources for the virtual non-L4S slice m are equal to the prioritized resources for the slice with a S-NSSAI m or each slice m; and/or
for the slice with a S-NSSAI, splitting the shared resources for the virtual L4S slice m and the virtual non-L4S slice such that a sum of the prioritized resources for the virtual L4S slice m and the prioritized resources for the virtual non-L4S slice m are equal to the prioritized resources for slice with S-NSSAI mf or each slice m;
the method preferably comprising: applying a splitting ratio to split the resources for the slice into dedicated resources, the prioritized resources, and the shared resources.

13. The method of claim 4, further comprising:

applying a preferential treatment for the shared resources to the L4S DRBs; and applying the splitting ratio for dedicated resources and the prioritized resources; or
applying a preferential treatment for the prioritized resources and the shared resources to the L4S DRBs; and applying the splitting ratio for the dedicated resources only; or
applying the splitting ratio for the dedicated resources to the virtual L4S slice, and setting dedicated resources for the corresponding non-L4S slice to be zero, whereby preferential treatment is given to L4S DRBs for the dedicated resources, the prioritized resources and the shared resources.

14. The method of claim 4, further comprising:

adding a Slice/Service Type (SST) for a L4S-eMBB slice;
contacting, by a UE, a DNS server to convert a web address to an IP address, to determine if a corresponding L4S server is supporting L4S services; and
asking, by the UE, for an L4S-eMBB slice instead of an enhanced mobile broadband (eMBB) slice when the UE establishes a PDU session in the 5G network.

15. The method of claim 14, further comprising:
determining, by the UE, if an intermediate node in the 5G network path also supports L4S services ,and preferably comprising building a database of frequently accessed application servers at the UE, and tracking, by the UE, whether or not the frequently accessed servers support L4S services.

```
+----------+                              +----------+
|   Web    |                              |   Web    |
|          |                              |          |
|          |--------------------|         |          |
| Server   | Signaling Path     | Server  |          |
|          | (e.g. SIP, XMPP)   |         |          |
+----------+                              +----------+
       /                                      \
      /                                        \ Application-defined
     /                                          \ over
    /                                            \ HTTPS/WebSockets
   /   Application-defined over                   \
  /    HTTPS/WebSockets                            \
 /                                                  \
+----------+                              +----------+
|JS/HTML/CSS|                             |JS/HTML/CSS|
+----------+                              +----------+
+----------+                              +----------+
|          |                              |          |
|          |                              |          |
| Browser  |------------------------------| Browser  |
|          |      Media Path              |          |
|          |      (Data)                  |          |
+----------+                              +----------+
```

JS: Java Script
SIP: Session Initiation Protocol
API: Application Programming Interface
XMPP: Extensible Messaging and Presence Protocol

FIG. 1

FIG. 2

FIG. 3

FIG. 4

FIG. 5

FIG. 6A

FIG. 6B

FIG. 7

FIG. 8

FIG. 9

FIG. 10

FIG. 11

UE x                    gNodeB (RU, DU, CU)              UPF            DNN
                                                                (e.g. for internet services)

                    PDU Session I for UE x, Slice id s1 (SST, SD)

    DRB y1                  NG-U: GTP-U tunnel for PDU session 1     IP Flows
                            QFI q1 (with 5QI h1 for non-GBR)

                            QFI q2 (with 5QI h2 for non-GBR)

    DRB y2
                            QFI q3 (with 5QI h3 for GBR)                         DNN
                                                                               (for IMS
                                                                               services)

                    PDU Session II for UE x. Slice id s2

    DRB z1                  NG-U: GTP-U tunnel for PDU session 2
                            QFI q4 (with 5QI h4 for GBR)
                            QFI q5 (with 5QI h5 for GBR)

DNN: Data Network Name, QFI: QoS Flow Identifier, UPF: User Plane Function (of 5G Core), 5QI: 5G QoS Identifier,
DRB: Data Radio Bearer, GBR: Guaranteed Bit Rate, SST: Slice / Service Type, SDD: Slice Differentiator

FIG. 12

FIG. 13

FIG. 14

FIG. 15

Slice SLA

NSI (Network Slice Instance)

5GCore NSSI        Transport Network NSSI

RAN NSSI (Network Subnet Slice Instance)

RRMPolicyManagedEntity

RAN Domain

5G Core Network
Domain

Transport Network
Domain

FIG. 16

<<ProxyClass>>
RRMPolicyManagedEntity

1    <<names>>

Represents the following IOCs:
NRCellCU, NRCellDU,
GNBCUUPFunction, GNBCUCPFunction,
GNBDUFunction

*

<<InformationObjectClass>>
RRMPolicy_

NRM Fragment for RRM Policies

<<InformationObjectClass>>
Top

△

<<InformationObjectClass>>
RRMPolicy_

△

<<InformationObjectClass>>
RRMPolicyRatio

- resourceType (e.g. PRBs, PDU sessions etc.)
- rRMPolicyMemberList (network slice or group
of slices that use this RRM policy)

- rRMPolicyMaxRatio
- rRMPolicyMinRatio
- rRMPolicyDedicatedRatio

FIG. 17

FIG. 18

Prioritized RBs for slice 1

Prioritized RBs for slice 2

| Dedicated RBs for PDU sessions of slice 1. All used by slice 1 PDU sessions | Prioritized RBs for slice 1: All RBs used by PDU sessions corresponding to slice 1 | Dedicated RBs for slice 2. All used by Slice 2 PDU sessions only | Prioritized RBs for slice 2 that are used by PDU sessions for slice 2 | Shared RBs for slice 1 and slice 2 |

Downlink Resource Blocks →
(in a given slot)

FIG. 19

201    -   Classify each DL DRB as L4S or non-L4S DRB at CU-UP

202    -   Communicate this to CU-CP and DU by enhancing E1 (between CU-UP and CU-CP) and F1-C (between CU-CP and DU)

203    -   Dynamically re-classify a DRB if needed

204    -   Compute scheduling metric for each L4S and non-L4S DRBs (or their associated logical channels) in DU

205    -   Sort these in the order of the values of this scheduling metric and select max L logical channels to serve in a slot (from top of this sorted list). Here, L to depend on hardware and software capabilities of the base station system.

206    -   Choose Method IA, IB, IC, IIA, IIB or IIC (or III)

207    -   In each iteration, resources allocated to a L4S DRB or a non-L4S DRB to be minimum of the resources given by selected method and the resources implied by the scheduling policy running at DU (using the scheduling metric computed in the previous step). Note this method to work with any type of scheduler chosen.

FIG. 20

L4S DRB: We classify a DRB to be L4S DRB if percentage of QoS flows (or percentage of packets) in this DRB which are carrying L4S marked packets is above a given threshold.

DNN: Data Network Name, QFI: QoS Flow Identifier, UPF: User Plane Function (of 5G Core), 5QI: 5G QoS Identifier, DRB: Data Radio Bearer, GBR: Guaranteed Bit Rate, SST: Slice / Service Type, SDD: Slice Differentiator

FIG. 21

DU                                CU-CP                               CU-UP

303

UE Context Modification Request: Enhanced to Indicate that one (or more) DRB(s) of a UE are L4S DRBs

302

Bearer Context Modification Required: Enhanced to indicate that one (or more) DRB(s) of a UE are L4S DRBs

301

Classify each DRB as L4S DRB or non-L4S DRB

Bearer Context Modification Confirmed

UE Context Modification Response

L4S DRB indication to slicing RRM method (for the corresponding DRB / PDU session of the UE)

L4S DRB: We classify a DRB to be L4S DRB if percentage of QFIs (or percentage of packets) in this DRB which are carrying L4S marked packets is above a given threshold.

FIG. 22

DU        CU-CP        CU-UP

313

312

310

**Bearer Context Modification Required:** Enhanced to indicate that L4S DRB y is no longer L4S DRB now

**UE Context Modification Request:** Enhanced to indicate that L4S DRB y is re-classified as non-L4S DRB

Re-classify L4S DRB y to non-L4S DRB

**Bearer Context Modification Confirmed**

**UE Context Modification Response**

L4S DRB indication to slicing RRM method (for the corresponding DRB / PDU session of the UE)

FIG. 23

| Method | First Iteration (of RB allocation in a slot, with LCs picked up in the descending order of the value of their scheduling metric, subject to maximum number of LCs per slot, L, which are feasible to be served in a given gNB) | | Second Iteration (for the remaining RBs in a slot after the first iteration, with the LCs picked up in the descending order of the value of their scheduling metric; for max L LCs which are feasible to be served in a given gNB) | |
|---|---|---|---|---|
| | L4S Logical Channel (LC) | Non-L4S LC | L4S LC | Non-L4S LC |
| IA | RBs allocated from dedicated, prioritized or shared pools of the corresponding slice | RBs allocated only from dedicated or prioritized pools of the corresponding slice | -- | RBs allocated from available resources from dedicated, prioritized or shared pools of the corresponding slice |
| IB | RBs allocated from dedicated, prioritized or shared pools of the corresponding slice | RBs allocated only from dedicated pool of the corresponding slice | -- | RBs allocated from dedicated, prioritized or shared pools of the corresponding slice |
| IC | RBs allocated from dedicated, prioritized or shared pools of the corresponding slice | No RBs allocated for non-L4S LCs in the first iteration | -- | RBs allocated from dedicated, prioritized or shared pools of the corresponding slice |

FIG. 24

Slice m (slice with S-NSSAI m)

rRMPolicyMaxRatio
(S-NSSAI: m)

Shared resources for DRBs
for slice id m

Prioritized resources for DRBs
for slice id m

rRMPolicyMinRatio
(S-NSSAI: m)

Dedicated resources for DRBs
for slice id m

rRMPolicyDedicatedRatio
(S-NSSAI: m)

402

Resources for slice m

This virtual split of resources for slice m is supported
at DU (e.g. for PRBs to be allocated for L4S and non-L4S
DRBs) and at CU (e.g. number of DRBs which can be
allowed for each type).

403

Virtual L4S slice m

Shared resources for DRBs
carrying L4S traffic for slice id m

rRMPolicyMaxRatio
(L4S DRBs, S-NSSAI: m)

Prioritized resources for DRBs
carrying L4S traffic for slice id m

rRMPolicyMinRatio
(L4S DRBs, S-NSSAI: m)

Dedicated resources for DRBs
carrying L4S traffic for slice id m

rRMPolicyDedicatedRatio
(L4S DRBs, S-NSSAI: m)

Resources for L4S DRBs of slice m

404

Virtual non-L4S slice m

Shared resources for DRBs
carrying non-L4S traffic for slice id m

rRMPolicyMaxRatio
(non-L4S DRBs, S-NSSAI: m)

Prioritized resources for DRBs
carrying non-L4S traffic for slice id m

rRMPolicyMinRatio
(non-L4S DRBs, S-NSSAI: m)

Dedicated resources for DRBs
carrying non-L4S traffic for slice id m

rRMPolicyDedicatedRatio
(non-L4S DRBs, S-NSSAI: m)

Resources for non-L4S DRBs of slice m

FIG. 25

IIA  - Preferential treatment given to L4S DRBs for shared resources, and splitting ratio based treatment for dedicated and prioritized pool of resources (within slice m)
     - Dedicated and prioritized pool of resources (e.g dedicated and prioritized pool of RBs) split for slice m
        - One set of these resources for virtual slice for L4S DRBs and another set for virtual slice for non-L4S DRBs
     - Splitting ratio specified for dedicated and prioritized resources for slice m only

IIB  - Preferential treatment given to L4S DRBs for shared and prioritized resources, and splitting ratio based treatment for dedicated pool of resources (within slice m)
     - Only the dedicated resources (e.g dedicated pool of RBs) split for slice m
        - One set for virtual slice for L4S DRBs and another set for virtual slice for non-L4S DRBs
     - Splitting ratio specified for dedicated resources for slice m only

IIC  - Preferential treatment given to L4S DRBs for dedicated, shared and prioritized resources (within slice m)
     - Dedicated resources specified for virtual slice for L4S DRBs only
     - No dedicated resources specified for virtual slice for non-L4S DRBs

FIG. 26

| Method | First Iteration (of RB allocation in a slot, with LCs picked up in the descending order of the value of their scheduling metric, subject to maximum number of LCs per slot, L, which are feasible to be served in a given gNB) | | Second Iteration (for the remaining RBs in a slot after the first iteration, with the LCs picked up in the descending order of the value of their scheduling metric; for max L LCs which are feasible to be served in a given gNB) | |
|---|---|---|---|---|
| | L4S Logical Channel (LC) | Non-L4S LC | L4S LC | Non-L4S LC |
| IIA | RBs allocated from dedicated, prioritized or shared pools of the corresponding virtual L4S slice (i.e. virtual slice carrying L4S DRBs) | RBs allocated only from dedicated or prioritized pools of the corresponding virtual non-L4S slice | For each picked up LC (whether it is L4S LC or non-L4S LC), RBs allocated from the available resources from the dedicated, prioritized or shared pools of the corresponding slice (i.e. including resources from virtual L4S slice and virtual non-L4S slice) | |
| IIB | RBs allocated from 1) the dedicated pool of the corresponding virtual L4S slice, and 2) RBs allocated from the prioritized or shared pools of the corresponding slice (i.e. from virtual L4S and virtual non-L4S slices) | RBs allocated only from dedicated pool of the corresponding virtual non-L4S slice | For each picked up LC (whether it is L4S LC or non-L4S LC), RBs allocated from the available resources from the dedicated, prioritized or shared pools of the corresponding slice (i.e. including resources from virtual L4S slice and virtual non-L4S slice) | |
| IIC | RBs allocated from dedicated, prioritized or shared pools of the corresponding slice (i.e. including virtual L4S slice and virtual non-L4S slice) | No RBs allocated for non-L4S LCs in the first iteration | — | For each picked up non-L4S LC, RBs allocated from the available resources from the dedicated, prioritized or shared pools of the corresponding slice |

FIG. 27

| SST | SD |
|---|---|
| 8 bits | 24 bits |

S-NSSAI

Standardized SSTs for eMBB, URLLC and MIoT slices exist

Enhancing structure of S-NSSAI for L4S-eMBB by adding SST for L4S-eMBB:

Either an operator specific SST (e.g. SST=250 for L4S-eMBB) can be used, or a new SST (e.g. SST=10) for L4S-eMBB can be standardized and used

Similarly, new SSTs can be added for other type of services (i.e. non-eMBB) also

Legend:
S-NSSAI: Single Network Slice Selection
          Assistance Information
SST: Slice / Service Type
SD: Slice Differentiator
L4S: Low Latency, Low Loss, Scalable Throughput
eMBB: Enhanced Mobile Broadband

FIG. 28

Co-existence of L4S and non-L4S traffic using 5G slicing based approaches where each DRB could be carrying mix of L4S and non-L4S flows

Co-existence of L4S and non-L4S traffic with resources for the corresponding slice split between virtual L4S and non-L4S slice within gNB. Different type of policies can be applied for splitting resources for these virtual slices.

Co-existence of L4S and non-L4S traffic with separate slices for L4S and non-L4S traffic

gNB enhanced with Method I, IA, IB, IC, ID

gNB enhanced with Method II, IIA, IIB, IIC

gNB enhanced with Method III

An example deployment option is to start with gNB enhanced with Method I / IA / IB / IC at present and migrate to method II / IIA / IIB / IIC and method III as L4S deployment becomes more widespread

FIG. 29

# EP 4 521 815 A1

Europäisches
Patentamt

European
Patent Office

Office européen
des brevets

## EUROPEAN SEARCH REPORT

Application Number

EP 24 19 9167

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NIANSHAN SHI ET AL: "Support for L4S in NG-RAN", 3GPP DRAFT; R3-234302; TYPE OTHER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Toulouse, FR; 20230821 - 20230825 11 August 2023 (2023-08-11), XP052438030, Retrieved from the Internet: URL:https://www.3gpp.org/ftp/TSG_RAN/WG3_I u/TSGR3_121/Docs/R3-234302.zip [retrieved on 2023-08-11] | 1-3 | INV. H04W28/02 ADD. H04W88/08 |
| A | * section 2 * * Annex 1 * | 4-15 | |
| X | NAVEEN PALLE ET AL: "Enhancements for Traffic Prioritization in XR", 3GPP DRAFT; R2-2211719; TYPE DISCUSSION; FS_NR_XR_ENH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Toulouse, FR; 20221114 - 20221118 4 November 2022 (2022-11-04), XP052215823, Retrieved from the Internet: URL:https://www.3gpp.org/ftp/TSG_RAN/WG2_R L2/TSGR2_120/Docs/R2-2211719.zip [retrieved on 2022-11-04] | 1-3 | TECHNICAL FIELDS SEARCHED (IPC) H04W H04L |
| A | * sections 2-3 * | 4-15 | |

The present search report has been drawn up for all claims

| Place of search | Date of completion of the search | Examiner |
|---|---|---|
| The Hague | 9 January 2025 | Tseliou, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

55

EP 4 521 815 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *3GPP TS 23.501 V 18.1.0*, 05 April 2023
- *3GPP TS 28.500 V. 17.0.0*, 31 March 2023
- *3GPP TS 28.541 V 18.4.1*, 30 June 2023
- *3GPP TS 38.300 V 17.4.0*, 28 March 2023
- *3GPP TS 38.401 V 17.4.0*, 03 April 2023
- **MOCKAPETRIS, P.** Domain names - concepts and facilities. *STD 13, RFC 1034*, November 1987, https://www.rfc-editor.org/info/rfc1034
- **MOCKAPETRIS, P.** Domain names - implementation and specification. *STD 13, RFC 1035*, November 1987, https://www.rfc-editor.org/info/rfc1035
- **ALVESTRAND, H.** Overview: Real-Time Protocols for Browser-Based Applications. *RFC 8825*, January 2021, https://www.rfc-editor.org/info/rfc8825